(19) Europäisches Patentamt
European Patent Office
Office européen des brevets

(11) EP 4 645 738 A1

(12) EUROPEAN PATENT APPLICATION
published in accordance with Art. 153(4) EPC

(43) Date of publication:
05.11.2025 Bulletin 2025/45

(21) Application number: 24749488.3

(22) Date of filing: 03.01.2024

(51) International Patent Classification (IPC):
H04L 5/00 (2006.01)

(52) Cooperative Patent Classification (CPC):
H04L 5/00; H04W 72/0446; H04W 72/0453

(86) International application number:
PCT/CN2024/070326

(87) International publication number:
WO 2024/160006 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.02.2023 CN 202310125011

(71) Applicant: Huawei Technologies Co., Ltd.
Shenzhen, Guangdong 518129 (CN)

(72) Inventors:
• LIU, Xianda
  Shenzhen, Guangdong 518129 (CN)

• HU, Chen
  Shenzhen, Guangdong 518129 (CN)
• GAO, Xiang
  Shenzhen, Guangdong 518129 (CN)
• ZHANG, Zhening
  Shenzhen, Guangdong 518129 (CN)
• LIU, Kunpeng
  Shenzhen, Guangdong 518129 (CN)

(74) Representative: Pfenning, Meinig & Partner mbB
Patent- und Rechtsanwälte
Theresienhöhe 11a
80339 München (DE)

(54) SOUNDING REFERENCE SIGNAL (SRS) TRANSMISSION METHOD AND APPARATUS

(57) Embodiments of this application disclose a sounding reference signal SRS transmission method and apparatus. The method includes: A terminal device receives a cyclic shift offset value sent by a network device, where the cyclic shift offset value is one of N candidate cyclic shift offset values, where the N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2; determines a target pattern from the M SRS patterns based on the cyclic shift offset value; and sends an SRS based on the target pattern. According to the method, resources can be effectively allocated when a plurality of SRS ports supported by one SRS resource occupy a plurality of OFDM symbols.

| Terminal device | | Network device |
|---|---|---|

S401: Send a cyclic shift offset value, where the cyclic shift offset value is one of N candidate cyclic shift offset values, where the N candidate cyclic shift offset values correspond to M SRS patterns, and each SRS pattern in the M SRS patterns includes a quantity of OFDM symbols and a quantity of SRS combs that are occupied by at least two SRS ports

S402: Determine a target pattern from the M SRS patterns based on the cyclic shift offset value

S403: Send an SRS based on the target pattern

FIG. 4

EP 4 645 738 A1

## Description

This application claims priority to Chinese Patent Application No. 202310125011.1, filed with the China National Intellectual Property Administration on February 1, 2023 and entitled "SOUNDING REFERENCE SIGNAL SRS TRANSMISSION METHOD AND APPARATUS", which is incorporated herein by reference in its entirety.

## TECHNICAL FIELD

Embodiments of this application relate to the field of communication technologies, and in particular, to a sounding reference signal SRS transmission method and apparatus.

## BACKGROUND

A sounding reference signal (sounding reference signal, SRS) is a reference signal that can be used for channel estimation, and a network device may allocate a transmission resource to a terminal device based on the SRS.

For example, in a long term evolution (long term evolution, LTE) system, the SRS occupies a last single carrier frequency division multiple access (single carrier frequency division multiple access, SC-FDMA) symbol of a subframe, the SC-FDMA symbol is an SRS resource (SRS resource), one SRS resource supports at least one SRS port (port), and a plurality of ports may multiplex one SRS resource in frequency division and code division manners. In a 5th generation (5th generation, 5G) mobile communication system, SRS resource configuration is more flexible. One or more SRS resource sets (SRS resource set) may be configured in one time unit. Each SRS resource set includes at least one SRS resource, and each SRS resource supports at least one SRS port.

Currently, when an SRS port supported by one SRS resource occupies a single orthogonal frequency division multiple access (orthogonal frequency division multiplexing, OFDM) symbol, time-frequency resources occupied by a plurality of SRS ports may be allocated based on a maximum of two SRS patterns (pattern). When at least two ports supported by one SRS resource occupy a plurality of OFDM symbols, types of SRS patterns increase. How to allocate time-frequency resources occupied by a plurality of SRS ports is a problem to be urgently resolved currently.

## SUMMARY

Embodiments of this application disclose a sounding reference signal SRS transmission method and apparatus, to implement effective resource allocation when an SRS port supported by one SRS resource occupies a plurality of symbols.

According to a first aspect, this application discloses a sounding reference signal SRS transmission method. The sounding reference signal SRS transmission method may be applied to a terminal device, may be applied to a module (for example, a chip) in the terminal device, or may be applied to a logical module or software that can implement all or some functions of the terminal device. The following provides descriptions by using an example in which the method is applied to the terminal device. The sounding reference signal SRS transmission method may include: receiving a cyclic shift offset value sent by a network device, where the cyclic shift offset value is one of N candidate cyclic shift offset values, where

the N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2; determines a target pattern from the M SRS patterns based on the cyclic shift offset value; and sending an SRS based on the target pattern.

Optionally, that the N candidate cyclic shift offset values correspond to the M SRS patterns may be pre-agreed upon by the network device and the terminal device, or may be configured by the network device.

Optionally, one SRS pattern represents a quantity of OFDM symbols and a quantity of SRS combs that are occupied by one SRS resource.

Optionally, the terminal device may directly determine, based on the cyclic shift offset value, a quantity of OFDM symbols and a quantity of SRS combs that are occupied by one SRS resource.

Optionally, at least two SRS ports in one SRS resource correspond to a same slot slot configuration, a same scanning bandwidth configuration, and a same transmit power configuration.

In this embodiment of this application, different candidate cyclic shift offset values may be configured to implement allocation of a quantity of OFDM symbols and a quantity of SRS combs that are occupied by at least two SRS ports in one SRS resource, and indication information indicating the quantity of OFDM symbols and the quantity of SRS combs does not need to be additionally added, so that indication overheads and complexity of indicating the quantity of OFDM symbols and the quantity of SRS combs can be reduced.

In an existing mechanism, for a single OFDM symbol, there are only a maximum of two configurations (pattern) for one $K_{TC}$ value, and configurations increase when there are a plurality of OFDM symbols. In this embodiment of this application, the N candidate cyclic shift offset values correspond to the M SRS patterns, so that a plurality of configurations can be flexibly and efficiently indicated.

In a possible implementation, at least two SRS patterns in the M SRS patterns have different quantities of OFDM symbols.

In other words, different candidate cyclic shift values may be configured to indicate different quantities of OFDM symbols. Optionally, a quantity of candidate cyclic shift values corresponding to a same SRS pattern is not less than $\frac{n_{SRS}^{cs,max} * n_{OFDM} * n_{comb}}{n_p}$. . $n_{SRS}^{cs,max}$ is a maximum quantity of CSs supported on a comb, $n_{OFDM}$ is a quantity of OFDM symbols corresponding to the SRS pattern, $n_{comb}$ is a quantity of combs corresponding to the SRS pattern, and $n_p$ is a quantity of SRS ports in an SRS resource.

In this embodiment of this application, candidate cyclic shift offset values at a same comb spacing correspond to a plurality of SRS patterns, and quantities of OFDM symbols in the plurality of SRS patterns may be different. Time domain resources occupied by at least two SRS ports in one SRS resource are more flexible.

In a possible implementation, the method further includes:
receiving a first comb offset value sent by the network device, where the first comb offset value is used to determine a position of an SRS comb and a cyclic shift value that are occupied by each SRS port in the at least two SRS ports.

Sending the SRS based on the target pattern includes: sending the SRS based on the target pattern, the position of the SRS comb, and the cyclic shift value. In this embodiment of this application, a cyclic shift value occupied by each SRS port in the at least two SRS ports may be defined based on a comb offset value. In this method, a plurality of candidate cyclic shift offset values are not required to define the cyclic shift value, so that indication overheads for indicating the cyclic shift value can be effectively reduced.

In a possible implementation, the cyclic shift offset value corresponds to a plurality of SRS patterns in the M SRS patterns, and the method further includes:
receiving a second comb offset value sent by the network device.

The second comb offset value is used to determine the target pattern from the plurality of SRS patterns.

Optionally, the second comb offset value is one of C candidate comb offset values, the C candidate comb offset values correspond to the plurality of SRS patterns, and C is an integer greater than 1. A quantity of combs corresponding to each of the plurality of SRS patterns is greater than 1. Optionally, a quantity of candidate comb offset values corresponding to a same SRS pattern is not less than $\frac{K_{TC} * n_{OFDM} * n_{comb}}{n_p}$ . $K_{TC}$ is a comb spacing supported on one OFDM symbol,

$n_{OFDM}$ is a quantity of OFDM symbols corresponding to the SRS pattern, $n_{comb}$ is a quantity of combs corresponding to the SRS pattern, and $n_p$ is a quantity of SRS ports in an SRS resource.

In this embodiment of this application, the SRS pattern in the M SRS patterns is defined based on the cyclic shift offset value and the second comb offset value. In this method, addition of other indication information is avoided, and an amount of data can be reduced.

In a possible implementation, in the target pattern, a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol correspond to different cyclic shift values.

In this embodiment of this application, the at least two SRS ports occupy at least two OFDM symbols, and SRS ports that occupy different symbols correspond to different cyclic shift values. This can effectively lower a peak to average power ratio (PAPR: Peak to Average Power Ratio, PAPR).

In a possible implementation, in the target pattern, the quantity of OFDM symbols occupied by the at least two SRS ports is at least two, and the method further includes:
receiving OFDM symbol indication information sent by the network device, where the OFDM symbol indication information indicates a position of an OFDM symbol occupied by each SRS port in the at least two SRS ports, and the SRS is sent based on the position of the OFDM symbol occupied by each SRS port.

In this embodiment of this application, when a quantity of OFDM symbols occupied by at least two SRS ports is at least two, a position of an OFDM symbol occupied by each SRS port may be determined based on the OFDM symbol indication information.

According to a second aspect, this application discloses a sounding reference signal SRS transmission method. The sounding reference signal SRS transmission method may be applied to a terminal device, may be applied to a module (for example, a chip) in the terminal device, or may be applied to a logical module or software that can implement all or some functions of the terminal device. The following provides descriptions by using an example in which the method is applied to the terminal device. The sounding reference signal SRS transmission method may include: receiving SRS resource configuration information sent by a network device, where the SRS resource configuration information indicates an SRS resource including W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, where

the W SRS ports correspond to T coherence groups, T is an even number greater than 1 and less than W, and a quantity of first OFDM symbols occupied by an SRS port corresponding to each coherence group in the T coherence groups is less than Q; and
sending an SRS based on the SRS resource configuration information.

Optionally, a correspondence between the W SRS ports and the T coherence groups is predefined. Specifically, the terminal device may report a coherence capability of the terminal device, that is, a value of T. In other words, the W SRS ports that can be supported by the terminal device need to be grouped into the T coherence groups. The terminal device may determine a mapping relationship between transmit antennas of the terminal device and the W SRS ports based on the correspondence between the W SRS ports and the T coherence groups. Optionally, SRS ports in one coherence group may correspond to transmission of a same uplink data stream, and SRS ports in different coherence groups need to correspond to transmission of different uplink data streams.

Optionally, that W/Q is an integer may also be understood as, it is pre-agreed that values of W and Q need to satisfy: W is exactly divisible by Q.

Optionally, the Q first OFDM symbols need to satisfy: SRS ports corresponding to any two of the Q first OFDM symbols are different from each other.

Optionally, the SRS resource occupies Q*R consecutive OFDM symbols in one slot slot. At least one same SRS port is carried on an $[(i-1)*R+1]^{th}$ symbol, an $[(i-1)*R+2]^{th}$ symbol, ..., and an $[(i-1)*R+R]^{th}$ symbol, and i=1, 2, ..., Q. When i is set to different values, at least one different SRS port is carried on corresponding symbols.

In this embodiment of this application, ports in one SRS resource occupy a plurality of symbols, and SRS ports on each symbol are different from each other. All coherence groups may not be carried on one symbol, so that SRS measurement accuracy can be improved.

In a possible implementation, Q is not greater than T, and an SRS port corresponding to each coherence group in the T coherence groups occupies a same OFDM symbol.

In this embodiment of this application, SRS ports corresponding to coherence groups occupy a same OFDM symbol, so that SRS accuracy can be effectively improved.

In a possible implementation, Q is greater than T, an SRS port corresponding to one coherence group in the T coherence groups occupies K consecutive OFDM symbols, K is Q/T, and Q/T is an integer.

In this embodiment of this application, when a quantity of OFDM symbols is greater than a quantity of coherence groups, the SRS port corresponding to one coherence group in the T coherence groups occupies K consecutive OFDM symbols, so that SRS accuracy can be improved when the quantity of OFDM symbols is greater than the quantity of coherence groups.

In a possible implementation, the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

In this embodiment of this application, SRS ports corresponding to different coherence groups occupy different combs, to avoid interference and effectively improve SRS accuracy.

In a possible implementation, an SRS port corresponding to each coherence group is on one comb on each first OFDM symbol.

In this embodiment of this application, the SRS port corresponding to each coherence group is on one comb on each first OFDM symbol, to avoid interference and effectively improve SRS accuracy.

In a possible implementation, the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

It should be understood that a minimum interval between the Q first OFDM symbols is R-1 symbols. Specifically, for each first OFDM symbol, R-1 consecutive symbols following each first OFDM symbol are used for repeated transmission of the first OFDM symbol.

In this embodiment of this application, repeated transmission of the first OFDM symbol is performed, so that power of the SRS can be increased, thereby increasing a signal-to-noise ratio.

In a possible implementation, the SRS resource configuration information further indicates that repeated transmission is not configured or a configured quantity R of repeated transmissions is 1, and the Q first OFDM symbols are consecutive OFDM symbols.

In this embodiment of this application, transmission of the Q first OFDM symbols may be performed continuously, so that processing efficiency can be improved.

According to a third aspect, this application discloses a sounding reference signal SRS transmission method. The sounding reference signal SRS transmission method may be applied to a network device, may be applied to a module (for example, a chip) in the network device, or may be applied to a logical module or software that can implement all or some functions of the network device. The following provides descriptions by using an example in which the method is applied to the network device. The sounding reference signal SRS transmission method may include: sending a cyclic shift offset value to a terminal device, where the cyclic shift offset value is one of N candidate cyclic shift offset values, where

the N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2; and

receiving an SRS sent by the terminal device, where the SRS is sent based on a target pattern, and the target pattern is determined from the M SRS patterns based on the cyclic shift offset value.

In a possible implementation, at least two SRS patterns in the M SRS patterns have different quantities of OFDM symbols.

In a possible implementation, the method further includes:

sending a first comb offset value to the terminal device.

The first comb offset value is used to determine a position of an SRS comb and a cyclic shift value that are occupied by each SRS port in the at least two SRS ports, and the SRS is sent based on the target pattern, the position of the SRS comb, and the cyclic shift value.

In a possible implementation, the cyclic shift offset value corresponds to a plurality of SRS patterns in the M SRS patterns, and the method further includes:

sending a second comb offset value to the terminal device.

The second comb offset value is used to determine the target pattern from the plurality of SRS patterns.

In a possible implementation, in the target pattern, a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol correspond to different cyclic shift values.

In a possible implementation, in the target pattern, the quantity of OFDM symbols occupied by the at least two SRS ports is at least two, and the method further includes:

sending OFDM symbol indication information to the terminal device, where the OFDM symbol indication information indicates a position of an OFDM symbol occupied by each SRS port in the at least two SRS ports, and the SRS is sent based on the position of the OFDM symbol occupied by each SRS port.

According to a fourth aspect, this application discloses a sounding reference signal SRS transmission method. The sounding reference signal SRS transmission method may be applied to a network device, may be applied to a module (for example, a chip) in the network device, or may be applied to a logical module or software that can implement all or some functions of the network device. The following provides descriptions by using an example in which the method is applied to the network device. The sounding reference signal SRS transmission method may include: sending SRS resource configuration information to a terminal device, where the SRS resource configuration information indicates an SRS resource including W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, where

the W SRS ports correspond to T coherence groups, T is an even number greater than 1 and less than W, and a quantity of first OFDM symbols occupied by an SRS port corresponding to each coherence group in the T coherence groups is less than Q; and

receiving an SRS sent by the terminal device, where the SRS is sent based on the SRS resource configuration information.

In a possible implementation, Q is not greater than T, and an SRS port corresponding to each coherence group in the T coherence groups occupies a same OFDM symbol.

In a possible implementation, Q is greater than T, an SRS port corresponding to one coherence group in the T coherence groups occupies K consecutive OFDM symbols, and K is Q/T.

In a possible implementation, the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

In a possible implementation, an SRS port corresponding to each coherence group is on one comb on each first OFDM symbol.

In a possible implementation, the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

In a possible implementation, the SRS resource configuration information further indicates that repeated transmission is not configured or a configured quantity R of repeated transmissions is 1, and the Q first OFDM symbols are consecutive OFDM symbols.

According to a fifth aspect, this application discloses a sounding reference signal SRS transmission apparatus. The sounding reference signal SRS transmission apparatus may be used in a terminal device, may be used in a module (for example, a chip) in the terminal device, or may be used in a logical module or software that can implement all or some functions of the terminal device. The sounding reference signal SRS transmission apparatus may include:

a receiving unit, configured to receive a cyclic shift offset value sent by a network device, where the cyclic shift offset value is one of N candidate cyclic shift offset values, where

the N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2;

a determining unit, configured to determine a target pattern from the M SRS patterns based on the cyclic shift offset value; and

a sending unit, configured to send an SRS based on the target pattern.

In a possible implementation, at least two SRS patterns in the M SRS patterns have different quantities of OFDM symbols.

In a possible implementation, the receiving unit is further configured to:

receive a first comb offset value sent by the network device.

The first comb offset value is used to determine a position of an SRS comb and a cyclic shift value that are occupied by each SRS port in the at least two SRS ports.

The sending unit is specifically configured to send the SRS based on the target pattern, the position of the SRS comb, and the cyclic shift value.

In a possible implementation, the cyclic shift offset value corresponds to a plurality of SRS patterns in the M SRS patterns, and the receiving unit is further configured to:

receive a second comb offset value sent by the network device.

The second comb offset value is used to determine the target pattern from the plurality of SRS patterns.

In a possible implementation, in the target pattern, a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol correspond to different cyclic shift values.

In a possible implementation, in the target pattern, the quantity of OFDM symbols occupied by the at least two SRS ports is at least two, and the receiving unit is further configured to:

receive OFDM symbol indication information sent by the network device, where the OFDM symbol indication information indicates a position of an OFDM symbol occupied by each SRS port in the at least two SRS ports, and the SRS is sent based on the position of the OFDM symbol occupied by each SRS port.

According to a sixth aspect, this application discloses a sounding reference signal SRS transmission apparatus. The sounding reference signal SRS transmission apparatus may be used in a terminal device, may be used in a module (for example, a chip) in the terminal device, or may be used in a logical module or software that can implement all or some functions of the terminal device. The sounding reference signal SRS transmission apparatus may include:

a receiving unit, configured to receive SRS resource configuration information sent by a network device, where the SRS resource configuration information indicates an SRS resource including W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, where

the W SRS ports correspond to T coherence groups, T is an even number greater than 1 and less than W, and a quantity of first OFDM symbols occupied by an SRS port corresponding to each coherence group in the T coherence groups is less than Q; and

a sending unit, configured to send an SRS based on the SRS resource configuration information.

In a possible implementation, Q is not greater than T, and an SRS port corresponding to each coherence group in the T coherence groups occupies a same OFDM symbol.

In a possible implementation, Q is greater than T, an SRS port corresponding to one coherence group in the T coherence groups occupies K consecutive OFDM symbols, K is Q/T, and Q/T is an integer.

In a possible implementation, the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

In a possible implementation, an SRS port corresponding to each coherence group is on one comb on each first OFDM symbol.

In a possible implementation, the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

In a possible implementation, the SRS resource configuration information further indicates that repeated transmission is not configured or a configured quantity R of repeated transmissions is 1, and the Q first OFDM symbols are consecutive OFDM symbols.

According to a seventh aspect, this application discloses a sounding reference signal SRS transmission apparatus. The sounding reference signal SRS transmission apparatus may be used in a network device, may be used in a module (for example, a chip) in the network device, or may be used in a logical module or software that can implement all or some functions of the network device. The sounding reference signal SRS transmission apparatus may include a processing unit and a transceiver unit.

The sending unit is configured to send a cyclic shift offset value to a terminal device, where the cyclic shift offset value is one of N candidate cyclic shift offset values, where

the N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2.

The receiving unit is configured to receive an SRS sent by the terminal device, where the SRS is sent based on a target pattern, and the target pattern is determined from the M SRS patterns based on the cyclic shift offset value.

In a possible implementation, at least two SRS patterns in the M SRS patterns have different quantities of OFDM symbols.

In a possible implementation, the sending unit is further configured to send a first comb offset value to the terminal device.

The first comb offset value is used to determine a position of an SRS comb and a cyclic shift value that are occupied by each SRS port in the at least two SRS ports, and the SRS is sent based on the target pattern, the position of the SRS comb, and the cyclic shift value.

In a possible implementation, the cyclic shift offset value corresponds to a plurality of SRS patterns in the M SRS patterns, and the sending unit is further configured to send a second comb offset value to the terminal device.

The second comb offset value is used to determine the target pattern from the plurality of SRS patterns.

In a possible implementation, in the target pattern, a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol correspond to different cyclic shift values.

In a possible implementation, in the target pattern, the quantity of OFDM symbols occupied by the at least two SRS ports is at least two, and the sending unit is further configured to send OFDM symbol indication information to the terminal device, where the OFDM symbol indication information indicates a position of an OFDM symbol occupied by each SRS port in the at least two SRS ports, and the SRS is sent based on the position of the OFDM symbol occupied by each SRS port.

According to an eighth aspect, this application discloses a sounding reference signal SRS transmission apparatus. The sounding reference signal SRS transmission apparatus may be used in a network device, may be used in a module (for example, a chip) in the network device, or may be used in a logical module or software that can implement all or some functions of the network device. The sounding reference signal SRS transmission apparatus may include a processing unit and a transceiver unit.

The sending unit is configured to send SRS resource configuration information to a terminal device, where the SRS resource configuration information indicates an SRS resource including W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer.

The W SRS ports correspond to T coherence groups, T is an even number greater than 1 and less than W, and a quantity of first OFDM symbols occupied by an SRS port corresponding to each coherence group in the T coherence groups is less than Q.

The receiving unit is configured to receive an SRS sent by the terminal device, where the SRS is sent based on the SRS resource configuration information.

In a possible implementation, Q is not greater than T, and an SRS port corresponding to each coherence group in the T coherence groups occupies a same OFDM symbol.

In a possible implementation, Q is greater than T, an SRS port corresponding to one coherence group in the T coherence groups occupies K consecutive OFDM symbols, K is Q/T, and Q/T is an integer.

In a possible implementation, the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

In a possible implementation, an SRS port corresponding to each coherence group is on one comb on each first OFDM symbol.

In a possible implementation, the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

In a possible implementation, the SRS resource configuration information further indicates that repeated transmission is not configured or a configured quantity R of repeated transmissions is 1, and the Q first OFDM symbols are consecutive OFDM symbols.

According to a ninth aspect, this application discloses a sounding reference signal SRS transmission apparatus. The sounding reference signal SRS transmission apparatus may be the terminal device (or the network device) in the foregoing method embodiments, or may be a chip or a processor disposed in the terminal device (or the network device). The sounding reference signal SRS transmission apparatus includes a processor. The processor is coupled to a memory. The memory is configured to store a program or instructions. When the program or the instructions are executed by the processor, the sounding reference signal SRS transmission apparatus is enabled to perform the method performed by the terminal device (or the network device) or the chip or the processor in the terminal device (or the network device) in the foregoing method embodiments.

According to a tenth aspect, this application discloses a sounding reference signal SRS transmission apparatus. The sounding reference signal SRS transmission apparatus may be the terminal device (or the network device) in the foregoing method embodiments, or may be a chip disposed in the terminal device (or the network device). The sounding reference signal SRS transmission apparatus includes a processor and a memory. The memory is configured to store a program or instructions. When the program or the instructions are executed by the processor, the sounding reference signal SRS transmission apparatus is enabled to perform the method performed by the terminal device (or the network device) or the chip or the processor in the terminal device (or the network device) in the foregoing method embodiments.

According to an eleventh aspect, this application discloses a sounding reference signal SRS transmission apparatus. The sounding reference signal SRS transmission apparatus may be the terminal device (or the network device) in the foregoing method embodiments, or may be a chip disposed in the terminal device (or the network device). The sounding reference signal SRS transmission apparatus includes a communication interface and a processor, and optionally, further includes a memory. The memory is configured to store a computer program or instructions. The processor is coupled to the memory and the communication interface. When the processor executes the computer program or the instructions, the sounding reference signal SRS transmission apparatus is enabled to perform the method performed by the terminal device (or the network device) or the chip in the terminal device (or the network device) in the foregoing method embodiments.

According to a twelfth aspect, this application discloses a communication system. The communication system may include a terminal device that performs the sounding reference signal SRS transmission method disclosed in the first aspect (or the second aspect) and a network device that performs the sounding reference signal SRS transmission method disclosed in the third aspect (or the fourth aspect).

According to a thirteenth aspect, this application discloses a computer-readable storage medium. The computer-readable storage medium stores a computer program or computer instructions. When the computer program or the computer instructions are run by a processor, the sounding reference signal SRS transmission method disclosed in the foregoing aspects is implemented.

According to a fourteenth aspect, this application discloses a chip, including a processor, configured to execute a program stored in a memory. When the program is executed, the chip performs the foregoing method.

In a possible implementation, the memory is located outside the chip.

According to a fifteenth aspect, this application discloses a computer program product. The computer program product includes computer program code. When the computer program code is run by a processor, the foregoing sounding reference signal SRS transmission method is performed.

Beneficial effects of the fifth aspect to the fifteenth aspect are similar to beneficial effects of the corresponding method in the first aspect to the fourth aspect. For detailed descriptions, refer to the beneficial effects of the corresponding method.

**BRIEF DESCRIPTION OF DRAWINGS**

FIG. 1 is a diagram of comb structures with different comb spacings according to an embodiment of this application;

FIG. 2 is a diagram of frequency hopping according to an embodiment of this application;

FIG. 3 is a diagram of a network architecture according to an embodiment of this application;

FIG. 4 is a schematic flowchart of a sounding reference signal SRS transmission method according to an embodiment of this application;

FIG. 5A is a diagram of a case in which SRS ports occupy combs when a comb spacing is 2 according to an embodiment of this application;

FIG. 5B is a diagram of a case in which SRS ports occupy CS values when a comb spacing is 2 according to an embodiment of this application;

FIG. 6 is a schematic flowchart of another sounding reference signal SRS transmission method according to an embodiment of this application;

FIG. 7 is a diagram of a structure of a sounding reference signal SRS transmission apparatus according to an embodiment of this application;

FIG. 8 is a diagram of a structure of another sounding reference signal SRS transmission apparatus according to an embodiment of this application;

FIG. 9 is a diagram of a structure of still another sounding reference signal SRS transmission apparatus according to an embodiment of this application;

FIG. 10 is a diagram of a structure of still another sounding reference signal SRS transmission apparatus according to an embodiment of this application;

FIG. 11 is a diagram of a structure of still another sounding reference signal SRS transmission apparatus according to an embodiment of this application; and

FIG. 12 is a diagram of a structure of still another sounding reference signal SRS transmission apparatus according to an embodiment of this application.

**DESCRIPTION OF EMBODIMENTS**

The following clearly describes embodiments of this application in detail with reference to the accompanying drawings in embodiments of this application.

Terms used in embodiments of this application are merely used to explain specific embodiments of this application, but are not intended to limit this application.

The following first provides definitions of technical terms that may occur in embodiments of this application.

(1) SRS: The SRS is an uplink reference signal sent by user equipment (user equipment, UE) to a network device, used by the network device (for example, a base station) to obtain channel information of an uplink (Uplink, UL) channel of the UE, or obtain channel information of a downlink (Downlink, DL) channel of the UE based on channel reciprocity, so as to perform data scheduling on the UE based on the channel information.

(2) SRS port: Each SRS resource includes $N_{\mathrm{ap}}^{\mathrm{SRS}}$ SRS ports, where $N_{\mathrm{ap}}^{\mathrm{SRS}} \in \{1,2,4,8\}$.

Currently, in an existing design, each SRS resource can include only a maximum of four SRS ports. In embodiments of this application, SRS design is performed for eight SRS ports. Each SRS port corresponds to a specific time-frequency-code resource. In an ideal case, the SRS ports are orthogonal. Each SRS port corresponds to a physical antenna or a virtual antenna of UE.

(3) SRS comb (comb): Resource elements (resource element, RE) of two adjacent SRSs on one SRS comb are distributed at equal intervals. A comb spacing $K_{TC}$ is preconfigured by radio resource control (radio resource control, RRC), and a value of $K_{TC}$ may be 2, 4, or 8. SRSs of different terminal devices may be sent on a same OFDM symbol and a same resource block (Resource Block, RB), and may be distinguished based on different combs.

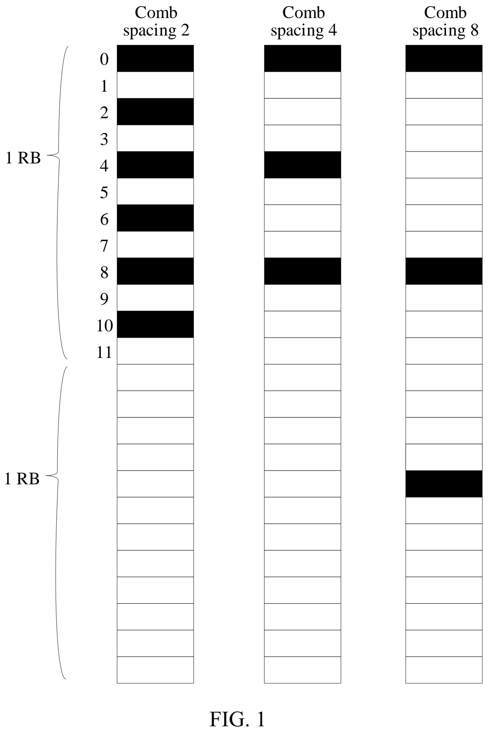

FIG. 1 is a diagram of comb structures with different comb spacings according to an embodiment of this application. As shown in FIG. 1, one grid in FIG. 1 is used to represent one RE, and a gray grid is an example of a position of an RE occupied by a comb. FIG. 1 shows an example of positions of REs occupied by a comb at three comb spacings.

(4) SRS scanning bandwidth and frequency hopping bandwidth: The SRS scanning bandwidth is a bandwidth range corresponding to obtaining a channel by a base station based on the SRS. However, only a part of the SRS scanning bandwidth may be sent at each SRS sending moment. In this case, a scanning bandwidth corresponding to an SRS at one SRS sending moment is a frequency hopping bandwidth. The base station may obtain, based on a plurality of SRS sending moments, a channel corresponding to the SRS scanning bandwidth.

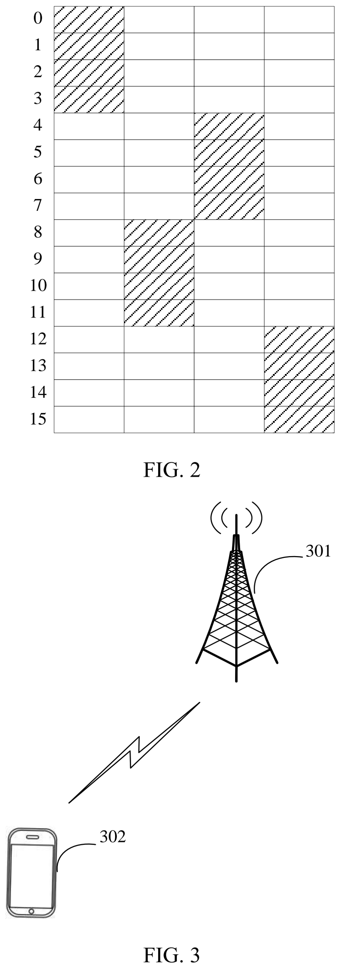

FIG. 2 is a diagram of frequency hopping according to an embodiment of this application. As shown in FIG. 2, one grid in FIG. 2 is used to represent one RB in frequency domain. FIG. 2 shows an example of resource allocation when an SRS scanning bandwidth is 16 RBs and an SRS frequency hopping bandwidth is 4 RBs. A diagonal grid is used to represent a bandwidth corresponding to an SRS, a horizontal direction is a time domain direction, and a vertical direction is a frequency domain direction.

(5) SRS repeated transmission

Repeated transmission refers to repeated transmission of a same signal. Through SRS repeated transmission, a signal-to-noise ratio (Signal-to-noise ratio, SNR) of an SRS can be increased. For example, one SRS has two ports. A same physical antenna is used for the two SRS ports on a plurality of consecutive OFDM symbols, and same transmit power occupies a same bandwidth for sending. A base station may combine signals received on the plurality of OFDM symbols (coherent combining). Because noise may be considered as white Gaussian noise, after coherent combining, only signal power can be increased, but noise power cannot be increased, thereby increasing the SNR.

(6) SRS resource

An SRS resource, that is, an SRS resource, includes one or more of a time domain resource, a frequency domain resource, and a space domain resource for SRS transmission. For example, the time domain resource may be a position of a time unit/time domain for sending an SRS, and the time unit may be a frame (frame), a subframe (subframe), a slot (slot), a symbol (symbol), or the like. The frequency domain resource may be a position of frequency domain for sending an SRS, and the space domain resource may be an antenna port, a beam direction, or the like.

The time domain resource is, for example, but is not limited to, one or more OFDM symbols.

A maximum of one SRS resource set may be activated for a same terminal at a same moment. One SRS resource set may include one or more SRS resources, and the plurality of SRS resources are distinguished by using resource IDs. Different terminal devices are configured with different SRS resources.

The following first describes cyclic shift (Cyclic shift, CS) allocation, comb position allocation, and a coherence capability of an antenna that are for an SRS.

(1) CS allocation

SRS ports in one SRS resource may be distinguished by using Combs/CSs, in other words, the SRS ports correspond to different Combs/CSs.

For an SRS sequence corresponding to an SRS, the SRS sequence $r_{u,v}^{(\alpha,\delta)}(n)$ is obtained based on a base sequence $\bar{r}_{u,v}(n)$ and a cyclic shift CS.

$$r_{u,v}^{(\alpha,\delta)}(n) = \mathrm{e}^{j\alpha n}\bar{r}_{u,v}(n), 0 \le n < M_{ZC} \quad \text{(Formula 1)}$$

The base sequence $\bar{r}_{u,v}(n)$ is defined by using a group index $u \in \{0, 1, ..., 29\}$, an intra-group base sequence index v, and a sequence length $M_{ZC}$, $\delta = \log_2(K_{TC})$, and $K_{TC} \in \{2, 4, 8\}$. $N_{sc}^{RB}$ is a quantity of subcarriers in an RB, m is a quantity of RBs occupied by an SRS in one frequency hopping, $M_{ZC}$ is the sequence length, and $M_{ZC} = mN_{sc}^{RB}/2^{\delta}$, and n is a number of each sequence element that is sequentially mapped to an RE of each SRS.

In Formula 1, $\alpha$ is a CS value, and is a sequence cyclic shift that additionally acts on the base sequence. A signal is multiplied by $e^{j\alpha n}$ in frequency domain, and it is equivalent to adding a delay to the signal in delay domain. In an ideal case, two signals with different CS values may be distinguished by a receive end.

An SRS port in each SRS resource corresponds to one CS value. $\alpha_i$ (that is, a CS value) of a $p_i$ port in an SRS resource may be defined as in Formula 2.

$$\alpha_i = 2\pi \frac{n_{\text{SRS}}^{\text{cs},i}}{n_{\text{SRS}}^{\text{cs,max}}} \quad \text{(Formula 2)}$$

$$n_{\text{SRS}}^{\text{cs},i} = \begin{cases} \left(n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left(n_{\text{SRS}}^{\text{cs}} + \frac{n_{\text{SRS}}^{\text{cs,max}}(p_i - 1000)}{N_{\text{ap}}^{\text{SRS}}}\right) \bmod n_{\text{SRS}}^{\text{cs,max}} & \text{otherwise} \end{cases} \quad \text{(Formula 3)}$$

$n_{\text{SRS}}^{\text{cs}}$ is a cyclic shift offset value (which may also be referred to as a CS offset value), $n_{\text{SRS}}^{\text{cs}}$ is configured by using an RRC parameter, and $n_{\text{SRS}}^{\text{cs}} \in \{0, 1, \ldots, n_{\text{SRS}}^{\text{cs,max}} - 1\}$. $N_{\text{ap}}^{\text{SRS}}$ is a quantity of ports in an SRS resource. $p_i$ is an index of each port, and starts from 1000. For example, if an SRS has two ports, port numbers are respectively 1000 and 1001. i represents an i$^{\text{th}}$ port in the SRS resource. Formula 3 is used to determine $n_{\text{SRS}}^{\text{cs},i}$ of each SRS port. $n_{\text{SRS}}^{\text{cs,max}}$ is a quantity of values of $n_{\text{SRS}}^{\text{cs}}$, $n_{\text{SRS}}^{\text{cs,max}}$ may be defined based on a value of a comb spacing $K_{\text{TC}}$, and $K_{\text{TC}}$ may be configured by RRC. $n_{\text{SRS}}^{\text{cs,max}}$ may be indicated by the following Table 1.

| Table 1 Mapping relationship between $n_{\text{SRS}}^{\text{cs,max}}$ and $K_{\text{TC}}$ | |
|---|---|
| $K_{\text{TC}}$ | $n_{\text{SRS}}^{\text{cs,max}}$ |
| 2 | 8 |
| 4 | 12 |
| 8 | 6 |

Specific examples of Formula 2 and Formula 3 may be as follows. For example, in an SRS resource, $N_{\text{ap}}^{\text{SRS}} = 2$, $n_{\text{SRS}}^{\text{cs,max}} = 8$, a difference between $n_{\text{SRS}}^{\text{cs},i}$ corresponding to two ports is 4, and CS values respectively occupied by the two ports are determined through $n_{\text{SRS}}^{\text{cs}}$ configuration. For another example, a quantity of SRS ports is 2, $n_{\text{SRS}}^{\text{cs,max}} = 12$, and a difference between $n_{\text{SRS}}^{\text{cs},i}$ corresponding to two ports is 6. For another example, $N_{\text{ap}}^{\text{SRS}} = 4$, and $n_{\text{SRS}}^{\text{cs,max}} = 6$. In this allocation manner, an interval between CS values corresponding to ports in an SRS resource is as large as possible.

(2) Comb position allocation

A frequency domain start position $k_0^{(p_i)}$ of a $p_i$ port in an SRS resource is defined as:

$$k_0^{(p_i)} = \bar{k}_0^{(p_i)} + n_{\text{offset}}^{\text{FH}} + n_{\text{offset}}^{\text{RPFS}}$$

$$\bar{k}_0^{(p_i)} = n_{\text{shift}} N_{\text{sc}}^{\text{RB}} + \left( k_{\text{TC}}^{(p_i)} + k_{\text{offset}}^{l'} \right) \bmod K_{\text{TC}}$$

$$k_{\text{TC}}^{(p_i)}$$

$$= \begin{cases} (\bar{k}_{\text{TC}} + K_{\text{TC}}/2) \bmod K_{\text{TC}} & \text{if } N_{\text{ap}}^{\text{SRS}} = 4,\ p_i \in \{1001, 1003\},\ \text{and } n_{\text{SRS}}^{\text{cs,max}} = 6 \\ (\bar{k}_{\text{TC}} + K_{\text{TC}}/2) \bmod K_{\text{TC}} & \text{if } N_{\text{ap}}^{\text{SRS}} = 4,\ p_i \in \{1001, 1003\},\ \text{and } n_{\text{SRS}}^{\text{cs}} \in \{n_{\text{SRS}}^{\text{cs,max}}/2, \ldots, n_{\text{SRS}}^{\text{cs,max}} - 1\} \\ \bar{k}_{\text{TC}} & \text{otherwise} \end{cases}$$

$$n_{\text{offset}}^{\text{FH}} = \sum_{b=0}^{B_{\text{SRS}}} K_{\text{TC}} M_{\text{sc},b}^{\text{SRS}} n_b$$

$$n_{\text{offset}}^{\text{RPFS}} = N_{\text{sc}}^{\text{RB}} m_{\text{SRS},B_{\text{SRS}}} \left( \left( k_{\text{F}} + k_{\text{hop}} \right) \bmod P_{\text{F}} \right) / P_{\text{F}}$$

$$k_{\text{F}} \in \{0, 1, \ldots, P_{\text{F}} - 1\}$$

$$\bar{k}_{\text{hop}} = \left\lfloor \frac{n_{\text{SRS}}}{\prod_{b'=b_{\text{hop}}}^{B_{\text{SRS}}} N_{b'}} \right\rfloor \bmod P_{\text{F}}$$

$$N_{b_{\text{hop}}} = 1$$

In embodiments of this application, $n_{\text{offset}}^{\text{RPFS}}$ and $n_{\text{offset}}^{\text{FH}}$ may be ignored, and a simplified consideration is as follows:

$$\bar{k}_0^{(p_i)} = n_{\text{shift}} N_{\text{sc}}^{\text{RB}} + k_{\text{TC}}^{(p_i)}$$

$$k_{\text{TC}}^{(p_i)} =$$

$$\begin{cases} (\bar{k}_{\text{TC}} + K_{\text{TC}}/2) \bmod K_{\text{TC}} & \text{if } N_{\text{ap}}^{\text{SRS}} = 4,\ p_i \in \{1001, 1003\},\ \text{and } n_{\text{SRS}}^{\text{cs,max}} = 6 \\ (\bar{k}_{\text{TC}} + K_{\text{TC}}/2) \bmod K_{\text{TC}} & \text{if } N_{\text{ap}}^{\text{SRS}} = 4,\ p_i \in \{1001, 1003\},\ \text{and } n_{\text{SRS}}^{\text{cs}} \in \{n_{\text{SRS}}^{\text{cs,max}}/2, \ldots, n_{\text{SRS}}^{\text{cs,max}} - 1\} \\ \bar{k}_{\text{TC}} & \text{otherwise} \end{cases}$$

It can be learned from the foregoing formula that, for a case in which $N_{\text{ap}}^{\text{SRS}} = 4$ and $n_{\text{SRS}}^{\text{cs,max}} = 6$, four ports occupy two combs. For a case in which $N_{\text{ap}}^{\text{SRS}} = 4$ and $n_{\text{SRS}}^{\text{cs,max}} \neq 6$, whether one SRS resource occupies two combs or one comb may be indicated through $n_{\text{SRS}}^{\text{cs}}$ configuration. Specifically, when $n_{\text{SRS}}^{\text{cs}} \in \{n_{\text{SRS}}^{\text{cs,max}}/2, \ldots, n_{\text{SRS}}^{\text{cs,max}} - 1\}$, for the port 1001 and the port 1003, occupied combs are different from those of the port 1000 and the port 1002; and when $n_{\text{SRS}}^{\text{cs}} \in \{0, \ldots, n_{\text{SRS}}^{\text{cs,max}}/2 - 1\}$, for the port 1001 and the port 1003, occupied combs are the same as those of the port 1000 and the port 1002.

(3) Coherence capability

During uplink transmission, a plurality of UE coherence capabilities may be defined for UE equipped with a plurality of transmit antennas.

Coherence means that a relative phase between the plurality of transmit antennas of the UE is stable in a period of time. Specifically, it is defined in an existing protocol that, in a time window of 20 ms, it is considered that the transmit antennas are coherent when the relative phase between the transmit antennas fluctuates within +-40 degrees. The transmit antenna having the coherence capability may perform coherent transmission. Specifically, a base station may obtain UL channel information of the plurality of transmit antennas at a moment n by using an SRS, and then determine, based on the information, amplitudes and phases (transmit precoding, TPMI) of UL signals subsequently sent by the plurality of transmit antennas, and indicate the amplitudes and phases to the UE. The UE sends the UL signals based on UL precoding. It can be learned that the coherence capability enables the base station to perform accurate measurement and determine UL transmit precoding.

The coherence capability of the UE may be classified into fully coherent, partially coherent, and non-coherent. Fully coherent means that all antennas of the UE may send a same data stream through precoding. Partially coherent means that some antennas of the UE may send a same data stream through precoding. Non-coherent means that one antenna of the UE may send a same data stream through precoding.

Based on the foregoing descriptions, to better understand a sounding reference signal SRS transmission method and a related apparatus that are provided in this application, the following first describes a network architecture to which embodiments of this application are applied.

FIG. 3 is a diagram of a network architecture according to an embodiment of this application. As shown in FIG. 3, the network architecture may include a network device 301 and a terminal device 302. The terminal device 302 may be connected to the network device 301 in a wireless manner, and may access a core network via the network device 301. The terminal device 302 may be at a fixed location, or may be movable.

The network device 301 may be an entity configured to transmit or receive a signal, or may be a device configured to communicate with the terminal device. The network device may be a base station (base transceiver station, BTS) in a global system for mobile communications (global system for mobile communications, GSM) or a code division multiple access (code division multiple access, CDMA), may be a base station (NodeB, NB) in a wideband code division multiple access (wideband code division multiple access, WCDMA) system, may be an evolved base station (evolved NodeB, eNB or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that connects the terminal device to the wireless network. Currently, some examples of the RAN node are a base station, a next-generation base station gNB, a transmission reception point (transmission reception point, TRP), an evolved NodeB (evolved NodeB, eNB), a home base station, a baseband unit (baseband unit, BBU), an access point (access point, AP) in a Wi-Fi system, or the like. In a network structure, the network device may include a central unit (central unit, CU) node, a distributed unit (distributed unit, DU) node, or a RAN device including the CU node and the DU node.

The terminal device 302 is an entity on a user side that is configured to receive or transmit a signal, for example, user equipment, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a mobile phone (mobile phone), a cellular phone, a cordless phone, a session initiation protocol (session initiation protocol, SIP) phone, a tablet computer (Pad), a computer with a wireless receiving and sending function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device having a wireless communication function, a computing device or another processing device connected to a wireless modem, a vehicle-mounted device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable device (for example, a smart watch, a smart band, and a pedometer), a terminal device in the 5G network, a terminal device in a future evolved public land mobile network (public land mobile network, PLMN), or the like. This is not limited in embodiments of this application. The terminal device may be a device deployed on land, including an indoor device, an outdoor device, a handheld device, a wearable device, or a vehicle-mounted device; may be a device deployed on water (for example, on a ship); or may be a device deployed in air (for example, on an airplane, a balloon, and a satellite). In embodiments of this application, the terminal device 302 may be legacy UE, may be partial frequency monitoring UE at an RB level (RB-level partial frequency hopping, RPFS) that supports SRS coverage and capacity enhancement, or may be another UE. A type of the terminal device is not limited in this application. The legacy UE refers to user equipment that supports an existing mechanism, for example, user equipment that supports release 15 and release 16.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs. In addition, the terminal device in embodiments of this application may alternatively be a terminal in an internet of things (internet of things, IoT) system. IoT is an important part of future information technology development. A main technical feature of the IoT is to connect an object to a network by using a communication technology, to implement an intelligent network for human-machine interconnection and thing-thing interconnection. In embodiments of this application, an IoT technology can implement massive connections, deep coverage, and terminal power saving by using, for example, a narrow band (narrow band, NB) technology. In addition, in embodiments of this application, the terminal device may alternatively include a sensor, for example, an intelligent printer, a train detector, and a gas station. Main functions of the terminal device include collecting data (some terminals), receiving control information and downlink data of the network device, sending an electromagnetic wave, and transmitting uplink data to the network device.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may alternatively be applied to another communication system, for example, a public land mobile network (public land mobile network, PLMN) system, a long term evolution advanced (LTE advanced, LTE-A) system, a 5G system, a new radio (new radio, NR) system, a machine to machine (machine to machine, M2M) system, or another future evolved communication system. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in embodiments of this application is not particularly limited in embodiments of this application, provided that a program that records code of the method provided in embodiments of this application is executable to perform communication according to the method provided in embodiments of this application. For example, the execution entity of the method provided in embodiments of this application may be the terminal device or the network device, or a functional module that can invoke and execute the program in the terminal device or the network device.

It should be noted that a quantity and types of terminal devices included in the network architecture shown in FIG. 3 are merely examples. Embodiments of this application are not limited thereto. For example, more or fewer terminal devices that communicate with the network device may alternatively be included. For brevity, details are not described in the accompanying drawings. In addition, in the network architecture shown in FIG. 3, although the network device and the terminal device are shown, an application scenario may not be limited to including the network device and the terminal device. For example, the application scenario may further include a core network node or a device configured to carry a virtualized network function. This is clear to a person skilled in the art, and details are not described herein.

With reference to the foregoing network architecture, the following describes a sounding reference signal SRS transmission method provided in embodiments of this application.

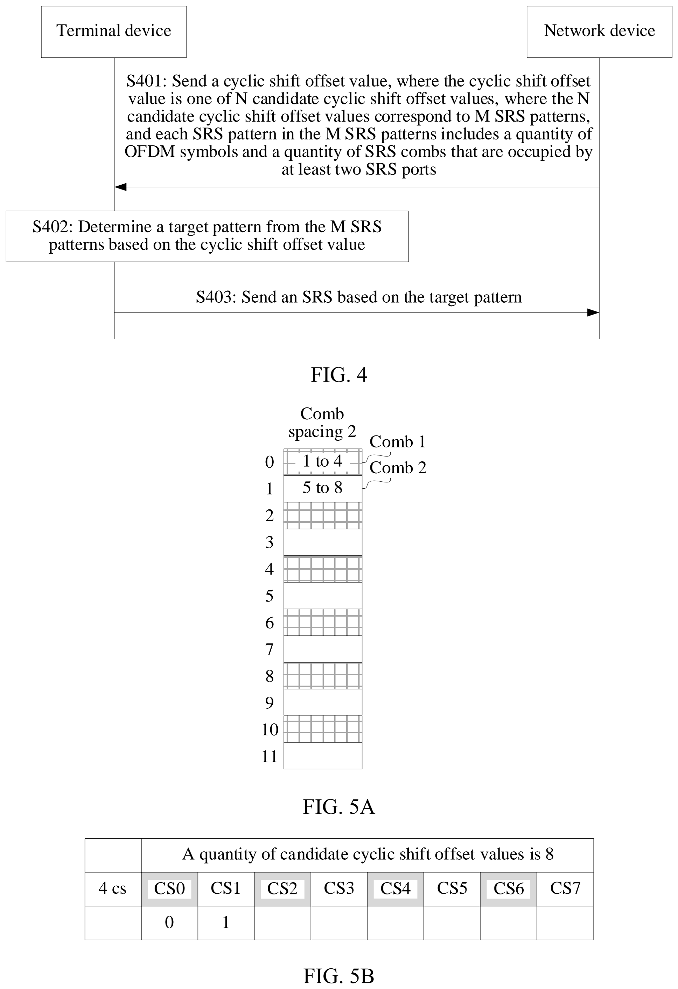

FIG. 4 is a schematic flowchart of a sounding reference signal SRS transmission method according to an embodiment of this application. In this embodiment, a function performed by the terminal device may alternatively be performed by a module (for example, a chip) in the terminal device. In this application, a function performed by the network device may alternatively be performed by a module (for example, a chip) in the network device. As shown in FIG. 4, the sounding reference signal SRS transmission method may include the following steps.

**Step S401: The network device sends a cyclic shift offset value to the terminal device, where the cyclic shift offset value is one of N candidate cyclic shift offset values, where the N candidate cyclic shift offset values correspond to M SRS patterns, and each SRS pattern in the M SRS patterns includes a quantity of OFDM symbols and a quantity of SRS combs that are occupied by at least two SRS ports.**

Correspondingly, the terminal device receives the cyclic shift offset value from the network device.

The at least two SRS ports belong to a same SRS resource, N is greater than or equal to M, and M is an integer not less than 2.

It should be understood that the cyclic shift offset value may be $n_{\mathrm{SRS}}^{\mathrm{cs}}$ described above, N may be a quantity $n_{\mathrm{SRS}}^{\mathrm{cs,max}}$ of values of $n_{\mathrm{SRS}}^{\mathrm{cs}}$, and the N candidate cyclic shift offset values may be candidate cyclic shift offset values corresponding to a comb spacing $K_{\mathrm{TC}}$. $K_{\mathrm{TC}}$ may be 2, 4, or 8. In an existing mechanism, an SRS has three different comb structures: comb structures respectively corresponding to a comb spacing 2, a comb spacing 4, and a comb spacing 8. The comb structure in this embodiment of this application may be a comb structure in the existing mechanism, or may be a comb structure evolved in the future, for example, comb structures respectively corresponding to a comb spacing 16 and a comb spacing 32. In this embodiment of this application, combs corresponding to the existing comb spacing 2, comb spacing 4, and comb spacing 8 are used as an example for description.

Optionally, that the N candidate cyclic shift offset values correspond to the M SRS patterns may be pre-agreed upon by the network device and the terminal device, or may be configured by the network device.

Optionally, one SRS pattern represents a quantity of OFDM symbols and a quantity of SRS combs that are occupied by one SRS resource.

Optionally, the terminal device may directly determine, based on the cyclic shift offset value, a quantity of OFDM symbols and a quantity of SRS combs that are occupied by one SRS resource.

Optionally, one SRS resource corresponds to one slot slot configuration, one scanning bandwidth configuration, and one transmit power configuration.

For example, the quantity N of candidate cyclic shift offset values may be determined from Table 1 in the foregoing descriptions based on $K_{\mathrm{TC}}$. For example, when $K_{\mathrm{TC}}$ is 2, $\mathrm{N}=n_{\mathrm{SRS}}^{\mathrm{cs,max}}=8$, and the N candidate cyclic shift offset values may be 0, 1, 2, 3, 4, 5, 6, and 7; when $K_{\mathrm{TC}}$ is 4, $\mathrm{N}=n_{\mathrm{SRS}}^{\mathrm{cs,max}}=12$, and the N candidate cyclic shift offset values may be 0, 1, 2, 3, 4, 5, 6, 7, 8, 9, 10, and 11; and when $K_{\mathrm{TC}}$ is 8, $\mathrm{N}=n_{\mathrm{SRS}}^{\mathrm{cs,max}}=6$, and the N candidate cyclic shift offset values may be 0, 1, 2, 3, 4, and 5. The cyclic shift offset value may alternatively be represented by a CS offset.

That the N candidate cyclic shift offset values correspond to the M SRS patterns includes: (1) One or more pieces of candidate $n_{\mathrm{SRS}}^{\mathrm{cs}}$ correspond to one SRS pattern. Refer to the following cases of different SRS patterns when a comb spacing is 2. (2) One piece of candidate $n_{\mathrm{SRS}}^{\mathrm{cs}}$ corresponds to at least two SRS patterns, and a target pattern is determined from two SRS patterns based on $\overline{k}_{\mathrm{TC}}$. Refer to the following cases of different SRS patterns when a comb spacing is 8.

The SRS pattern (SRS pattern) includes a quantity a of OFDM symbols and a quantity b of SRS combs that are occupied by at least two SRS ports.

In this embodiment of this application, for ease of description, "a symbol b comb c CS" indicates an SRS pattern. a is a quantity of OFDM symbols occupied by at least two SRS ports in the SRS pattern, b is a quantity of SRS combs that are occupied by the at least two SRS ports in the SRS pattern and that are on one symbol, and c is a quantity of ports on one comb on one symbol in the SRS pattern. It should be understood that a product of a quantity of symbols, a quantity of SRS combs, and a quantity of ports on one comb on one symbol is a quantity of SRS ports in one SRS resource. Therefore, "a symbol b comb" may also indicate an SRS pattern. Each SRS port corresponds to a cyclic shift offset value of one comb on one symbol.

It should be understood that "a symbol b comb c CS" is merely an example provided in this embodiment of this application to describe an expression of an SRS pattern in this embodiment of this application, and does not constitute a limitation on this embodiment of this application.

Different $K_{\mathrm{TC}}$ may correspond to different quantities and values of the N candidate cyclic shift offset values, and different candidate cyclic shift offset values may correspond to different SRS patterns.

In an implementation, at least two SRS patterns in the M SRS patterns have different quantities of OFDM symbols.

In other words, different candidate cyclic shift values may be configured to indicate different quantities of OFDM symbols. Optionally, a quantity of candidate cyclic shift values corresponding to a same SRS pattern is not less than

$\dfrac{n_{\text{SRS}}^{\text{cs,max}} * n_{OFDM} * n_{comb}}{n_p}$ . $n_{\text{SRS}}^{\text{cs,max}}$ is a maximum quantity of CSs supported on a comb, $n_{OFDM}$ is a quantity of OFDM symbols corresponding to the SRS pattern, $n_{comb}$ is a quantity of combs corresponding to the SRS pattern, and $n_p$ is a quantity of SRS ports in an SRS resource.

In this embodiment of this application, a cyclic shift offset value CS offset ( $n_{\text{SRS}}^{\text{cs}}$ ) and/or a comb offset value comb offset ($\overline{k}_{\text{TC}}$) may indicate different SRS patterns. The cyclic shift offset value may also be referred to as a cyclic shift reference value, and the cyclic shift offset value is used to calculate a cyclic shift value.

For example, for a pattern of 1 symbol 1 comb 8 CS when $K_{\text{TC}}$ = 2, 8 ports occupy same eight CS values regardless of a value indicated by $n_{\text{SRS}}^{\text{cs}}$ . Therefore, for this pattern, an indication of $n_{\text{SRS}}^{\text{cs}}$ is redundant. For another example, for a pattern of 1 symbol 2 comb 4 CS when $K_{\text{TC}}$ = 2, because one comb occupies four CS values, and an interval between the four occupied CS values is fixed to 2, $n_{\text{SRS}}^{\text{cs}}$ only needs to indicate 0 and 1, and it is also redundant for $n_{\text{SRS}}^{\text{cs}}$ to indicate another CS value. Because SRS patterns (a quantity of combs occupied in one OFDM symbol) at different $K_{\text{TC}}$ are different, pieces of candidate $n_{\text{SRS}}^{\text{cs}}$ may be divided into a plurality of sections based on $K_{\text{TC}}$. $n_{\text{SRS}}^{\text{cs}}$ in each section corresponds to one SRS pattern, and indicates a CS value in the SRS pattern. For one SRS pattern, it is redundant for $n_{\text{SRS}}^{\text{cs}}$ to indicate another CS value $n_{\text{SRS}}^{\text{cs}}$ , and therefore $n_{\text{SRS}}^{\text{cs}}$ may indicate another SRS pattern.

The following uses an example in which one SRS resource includes eight SRS ports (that is, a case of 8 ports) to show SRS patterns when comb spacings $K_{\text{TC}}$ are 2, 4, and 8 respectively.

(I) $K_{\text{TC}}$ is 2

When $K_{TC}=2$ ($n_{\text{SRS}}^{\text{cs},max} = 8$) , candidate $n_{\text{SRS}}^{\text{cs}}$ values (that is, the N candidate cyclic shift offset values described above) may include 0, 1, 2, 3, 4, 5, 6, and 7. The candidate $n_{\text{SRS}}^{\text{cs}}$ values may be divided into four sections, where the four sections may be [0], [1], [2, 3], and [4, 5, 6, 7] respectively, and $n_{\text{SRS}}^{\text{cs}}$ in each section corresponds to one SRS pattern.

It should be understood that each SRS pattern may correspond to at least one candidate $n_{\text{SRS}}^{\text{cs}}$ value, and candidate $n_{\text{SRS}}^{\text{cs}}$ values corresponding to a same SRS pattern are used as the foregoing section.

(1) The section is [0], in other words, the N candidate cyclic shift offset values are 0.

In this case, an SRS pattern corresponding to $n_{\text{SRS}}^{\text{cs}} \in [0]$ may be 1 symbol 1 comb 8 cs, to be specific, eight SRS ports in the SRS pattern corresponding to the candidate cyclic shift offset value 0 occupy one OFDM symbol and one SRS comb on the OFDM symbol.

Comb positions of SRS combs occupied by the eight SRS ports may be further defined based on the comb offset value $\overline{k}_{\text{TC}}$. A frequency domain start position $k_{\text{TC}}^{(p_i)}$ of a $p_i$ port in an SRS resource may be defined as follows:

$$k_{\text{TC}}^{(p_i)} = \overline{k}_{\text{TC}}$$

CS values respectively occupied by the eight SRS ports may be further defined according to the following formula, and the formula is shown as follows:

$$n_{\text{SRS}}^{\text{cs},i} = \left( n_{\text{SRS}}^{\text{cs}} + \frac{n_{\text{SRS}}^{\text{cs,max}}(p_i - 1000)}{N_{\text{ap}}^{\text{SRS}}} \right) \bmod n_{\text{SRS}}^{\text{cs,max}}$$

(2) The section is [1], in other words, the N candidate cyclic shift offset values are 1.

In this case, an SRS pattern corresponding to $n_{\text{SRS}}^{\text{cs}} \in [1]$ may be 1 symbol 2 comb 4 cs, to be specific, eight SRS ports in the SRS pattern corresponding to the candidate cyclic shift offset value 1 occupy one OFDM symbol and two SRS combs on the OFDM symbol.

Comb positions of SRS combs occupied by the eight SRS ports may be further defined based on the comb offset value $\overline{k}_{\text{TC}}$. A frequency domain start position $k_{\text{TC}}^{(p_i)}$ of a $p_i$ port in an SRS resource may be defined as follows:

$$k_{\text{TC}}^{(p_i)} = \begin{cases} (\overline{k}_{\text{TC}} + K_{\text{TC}}/2) \bmod K_{\text{TC}} & \text{if } p_i \in \{1001, 1003, 1005, 1007\} \\ \overline{k}_{\text{TC}} & \text{if } p_i \in \{1000, 1002, 1004, 1006\} \end{cases}$$

FIG. 5A is a diagram of a case in which SRS ports occupy combs when a comb spacing is 2 according to an embodiment of this application. FIG. 5A shows an example of distribution of eight SRS ports on a comb 1 and a comb 2. It is assumed that the eight SRS ports are grouped into two groups: SRS ports 1 to 4 (for example, the SRS ports 1000, 1001, 1002, and 1003) and SRS ports 5 to 8 (for example, the SRS ports 1001, 1003, 1005, and 1007). The SRS ports 1 to 4 are on the comb 1, and the SRS ports 5 to 8 are on the comb 2.

It should be understood that, in the foregoing definition of $k_{\text{TC}}^{(p_i)}$, it is assumed that the SRS ports 1000, 1001, 1002, and 1003 are in one polarization direction, and the SRS ports 1004, 1005, 1006, and 1007 are in another polarization direction, or the SRS ports 1000 to 1007 are all in a same polarization direction.

Optionally, in a case in which UE having eight antennas has only a partial coherence capability (eight antennas are grouped into T groups, antennas in each group are coherent, and antennas between groups are incoherent), when T=2, it may be assumed that the SRS ports 1000, 1002, 1004, and 1006 are in one coherence group, and the SRS ports 1001, 1003, 1005, and 1007 are in the other coherence group; and when T=4, it may be assumed that the SRS ports 1000 and 1004 are in a coherence group, the SRS ports 1001 and 1005 are in a coherence group, the SRS ports 1002 and 1006 are in a coherence group, and the SRS ports 1003 and 1007 are in a coherence group. In this case, in the foregoing comb allocation, it may be ensured that antennas in a same coherence group occupy a same comb regardless of whether T=2 or T=4. It should be noted that a port allocation method herein is also applicable to the following cases in which $K_{\text{TC}}$ is 4 and $K_{\text{TC}}$ is 8, and details are not described below.

A coherence group includes at least one antenna, and antennas in the coherence group are coherent. It should be understood that the coherence group is a name provided as an example for ease of description in embodiments of this application, and should not constitute a limitation on embodiments of this application. The "coherence group" may also be referred to as a coherence antenna group, a port combination, or the like. The "coherence group" may alternatively be expressed in other ways. This is not limited in embodiments of this application.

It should be noted that each antenna in the at least one antenna corresponds to one SRS port. In this embodiment of this application, for brevity, that antennas corresponding to several SRS ports are in one coherence group is simplified as that several SRS ports are in one coherence group, for example, "the SRS ports 1000, 1002, 1004, and 1006 are in one coherence group". Details are not described again.

Optionally, when T=2, it may be assumed that the SRS ports 1000, 1001, 1004, and 1005 are in one coherence group, and the SRS ports 1002, 1003, 1006, and 1007 are in the other coherence group. Although antennas in a same coherence group do not occupy a same comb in a case of T=2, a CS interval between antennas in a same coherence group may be increased as much as possible on each comb, to improve receiving performance.

CS values occupied by the eight SRS ports may be further defined based on the comb offset value $\overline{k}_{\text{TC}}$. That the CS values occupied by the eight SRS ports are defined based on $\overline{k}_{\text{TC}}$ may be: First, $n_{\text{SRS}}^{\text{cs},i}$ corresponding to each SRS port is defined based on $\overline{k}_{\text{TC}}$, and then a CS value occupied by each SRS port is defined according to Formula 2 and based on $n_{\text{SRS}}^{\text{cs},i}$ corresponding to each SRS port. $n_{\text{SRS}}^{\text{cs},i}$ of a $p_i$ port in an SRS resource may be defined as follows:

$$n_{\text{SRS}}^{\text{cs},i} = \left(\overline{k}_{\text{TC}} + \frac{n_{\text{SRS}}^{\text{cs,max}}(p_i - 1000)}{N_{\text{ap}}^{\text{SRS}}}\right) \bmod n_{\text{SRS}}^{\text{cs,max}}$$

FIG. 5B is a diagram of a case in which SRS ports occupy CS values when a comb spacing is 2 according to an embodiment of this application. FIG. 5B shows an example of a case in which SRS ports occupy CS values when $K_{TC}$ is 2 and an SRS pattern is 1 symbol 2 comb 4 cs. The CS values occupied by the SRS ports may be CS0, CS2, CS4, and CS6, or CS1, CS3, CS5, and CS7. Therefore, CS values occupied by eight SRS ports may be defined based on $\overline{k}_{\text{TC}}$.

(3) When the section is [2, 3], in other words, the N candidate cyclic shift offset values are 2 and 3, the cyclic shift offset value may be 2 or 3.

In this case, an SRS pattern corresponding to $n_{\mathrm{SRS}}^{\mathrm{cs}} \in [2, 3]$ may be 2 symbol 1 comb 4 cs, to be specific, eight SRS ports in the SRS pattern corresponding to the candidate cyclic shift offset values 2 and 3 occupy two OFDM symbols and one SRS comb on each OFDM symbol.

CS values occupied by the eight SRS ports may be further defined based on $n_{\mathrm{SRS}}^{\mathrm{cs}}$. That the CS values occupied by the eight SRS ports are defined based on $\overline{k}_{\mathrm{TC}}$ may be: First, $n_{\mathrm{SRS}}^{\mathrm{cs},i}$ corresponding to each SRS port is defined based on $\overline{k}_{\mathrm{TC}}$, and then a CS value occupied by each SRS port is defined according to Formula 2 and based on $n_{\mathrm{SRS}}^{\mathrm{cs},i}$ corresponding to each SRS port. $n_{\mathrm{SRS}}^{\mathrm{cs},i}$ of a $p_i$ port in an SRS resource may be defined as follows:

$$n_{\mathrm{SRS}}^{\mathrm{cs},i} = \left( n_{\mathrm{SRS}}^{\mathrm{cs}} - 2 + \frac{n_{\mathrm{SRS}}^{\mathrm{cs,max}}(p_i - 1000)}{N_{\mathrm{ap}}^{\mathrm{SRS}}} \right) \bmod n_{\mathrm{SRS}}^{\mathrm{cs,max}},$$

or

$$n_{\mathrm{SRS}}^{\mathrm{cs},i} = \left( n_{\mathrm{SRS}}^{\mathrm{cs}} + \frac{n_{\mathrm{SRS}}^{\mathrm{cs,max}}(p_i - 1000)}{N_{\mathrm{ap}}^{\mathrm{SRS}}} \right) \bmod n_{\mathrm{SRS}}^{\mathrm{cs,max}}$$

Comb positions of SRS combs occupied by the eight SRS ports may be further defined based on the comb offset value $\overline{k}_{\mathrm{TC}}$. A frequency domain start position $k_{\mathrm{TC}}^{(p_i)}$ of a $p_i$ port in an SRS resource may be defined as follows:

$$k_{\mathrm{TC}}^{(p_i)} = \overline{k}_{\mathrm{TC}}$$

Symbol positions of OFDM symbols occupied by the eight SRS ports may be further defined based on symbol indication information $\overline{T}$. A symbol position $T^{(p_i)}$ of an OFDM symbol of a $p_i$ port in an SRS resource may be defined as follows:

$$T^{(p_i)} = \begin{cases} \overline{T} + 1 & \text{if } p_i \in \{1001, 1003, 1005, 1007\} \\ \overline{T} & \text{if } p_i \in \{1000, 1002, 1004, 1006\} \end{cases}$$

When T=2, it may be assumed that the SRS ports 1000, 1002, 1004, and 1006 are in one coherence group, and the SRS ports 1001, 1003, 1005, and 1007 are in the other coherence group; and when T=4, it may be assumed that the SRS ports 1000 and 1004 are in a coherence group, the SRS ports 1001 and 1005 are in a coherence group, the SRS ports 1002 and 1006 are in a coherence group, and the SRS ports 1003 and 1007 are in a coherence group. In other words, a same coherence group may be defined to occupy a same OFDM symbol and a same comb as much as possible.

(4) When the section is [4, 5, 6, 7], in other words, the N candidate cyclic shift offset values are 4, 5, 6, 7, the cyclic shift offset value may be one of 4, 5, 6, 7.

For example, the section may correspond to at least one SRS pattern in two SRS patterns.

First SRS pattern: An SRS pattern corresponding to that $n_{\mathrm{SRS}}^{\mathrm{cs}} \in [4, 5, 6, 7]$ may be an SRS pattern 4 symbol 1 comb 2 cs, to be specific, eight SRS ports in the SRS pattern corresponding to the candidate cyclic shift offset values 4, 5, 6, 7 occupy four OFDM symbols and one SRS comb on each OFDM symbol.

In the first SRS pattern, CS values occupied by the eight SRS ports may be further defined based on $n_{\mathrm{SRS}}^{\mathrm{cs}}$. That the CS values occupied by the eight SRS ports are defined based on $\overline{k}_{\mathrm{TC}}$ may be: First, $n_{\mathrm{SRS}}^{\mathrm{cs},i}$ corresponding to each SRS port is defined based on $\overline{k}_{\mathrm{TC}}$, and then a CS value occupied by each SRS port is defined according to Formula 2 and based on $n_{\mathrm{SRS}}^{\mathrm{cs},i}$ corresponding to each SRS port. $n_{\mathrm{SRS}}^{\mathrm{cs},i}$ of a $p_i$ port in an SRS resource may be defined as follows:

$$n_{\text{SRS}}^{\text{cs},i} = \left( n_{\text{SRS}}^{\text{cs}} - 4 + \frac{n_{\text{SRS}}^{\text{cs,max}}(p_i - 1000)}{N_{\text{ap}}^{\text{SRS}}} \right) \bmod n_{\text{SRS}}^{\text{cs,max}},$$

or

$$n_{\text{SRS}}^{\text{cs},i} = \left( n_{\text{SRS}}^{\text{cs}} + \frac{n_{\text{SRS}}^{\text{cs,max}}(p_i - 1000)}{N_{\text{ap}}^{\text{SRS}}} \right) \bmod n_{\text{SRS}}^{\text{cs,max}}$$

In the first SRS pattern, comb positions of SRS combs occupied by the eight SRS ports may be further defined based on the comb offset value $\overline{k}_{\text{TC}}$. A frequency domain start position $k_{\text{TC}}^{(p_i)}$ of a $p_i$ port in an SRS resource may be defined as follows:

$$k_{\text{TC}}^{(p_i)} = \overline{k}_{\text{TC}}$$

In the first SRS pattern, symbol positions of OFDM symbols occupied by the eight SRS ports may be further defined based on symbol indication information $\overline{T}$. A symbol position $T^{(p_i)}$ of an OFDM symbol of a $p_i$ port in an SRS resource may be defined as follows:

$$T^{(p_i)} = \begin{cases} \overline{T} + 3 & \text{if } p_i \in \{1003, 1007\} \\ \overline{T} + 2 & \text{if } p_i \in \{1001, 1005\} \\ \overline{T} + 1 & \text{if } p_i \in \{1002, 1006\} \\ \overline{T} & \text{if } p_i \in \{1000, 1004\} \end{cases}$$

Optionally, a same coherence group may occupy a same OFDM symbol and a same comb as much as possible, or occupy adjacent OFDM symbols.

Second SRS pattern: An SRS pattern corresponding to $n_{\text{SRS}}^{\text{cs}} \in [4, 5, 6, 7]$ may be 2 symbol 2 comb 2 cs, to be specific, eight SRS ports in the SRS pattern corresponding to the candidate cyclic shift offset values 4, 5, 6, 7 occupy two OFDM symbols and two SRS combs on each OFDM symbol.

In the second SRS pattern, CS values occupied by the eight SRS ports may be further defined based on $n_{\text{SRS}}^{\text{cs}}$.

That the CS values occupied by the eight SRS ports are defined based on $\overline{k}_{\text{TC}}$ may be: First, $n_{\text{SRS}}^{\text{cs},i}$ corresponding to each SRS port is defined based on $\overline{k}_{\text{TC}}$, and then a CS value occupied by each SRS port is defined according to Formula 2 and based on $n_{\text{SRS}}^{\text{cs},i}$ corresponding to each SRS port. $n_{\text{SRS}}^{\text{cs},i}$ of a $p_i$ port in an SRS resource may be defined as follows:

$$n_{\text{SRS}}^{\text{cs},i} = \left( n_{\text{SRS}}^{\text{cs}} - 4 + \frac{n_{\text{SRS}}^{\text{cs,max}}(p_i - 1000)}{N_{\text{ap}}^{\text{SRS}}} \right) \bmod n_{\text{SRS}}^{\text{cs,max}},$$

or

$$n_{\text{SRS}}^{\text{cs},i} = \left( n_{\text{SRS}}^{\text{cs}} + \frac{n_{\text{SRS}}^{\text{cs,max}}(p_i - 1000)}{N_{\text{ap}}^{\text{SRS}}} \right) \bmod n_{\text{SRS}}^{\text{cs,max}}$$

In the second SRS pattern, comb positions of SRS combs occupied by the eight SRS ports may be further defined based on the comb offset value $\overline{k}_{\text{TC}}$. A frequency domain start position $k_{\text{TC}}^{(p_i)}$ of a $p_i$ port in an SRS resource may be defined as follows:

$$k_{\mathrm{TC}}^{(p_i)} = \begin{cases} (\bar{k}_{\mathrm{TC}} + K_{\mathrm{TC}}/2) \bmod K_{\mathrm{TC}} & \text{if } p_i \in \{1002, 1003, 1006, 1007\} \\ \bar{k}_{\mathrm{TC}} & \text{if } p_i \in \{1000, 1001, 1004, 1005\} \end{cases}$$

In the second SRS pattern, symbol positions of OFDM symbols occupied by the eight SRS ports may be further defined based on symbol indication information $\bar{T}$. A symbol position $T^{(pi)}$ of an OFDM symbol of a $p_i$ port in an SRS resource may be defined as follows:

$$T^{(p_i)} = \begin{cases} \bar{T} + 1 & \text{if } p_i \in \{1001, 1003, 1005, 1007\} \\ \bar{T} & \text{if } p_i \in \{1000, 1002, 1004, 1006\} \end{cases}$$

It can be learned that four different SRS patterns may be distinguished based on an indication of $n_{\mathrm{SRS}}^{\mathrm{cs}}$, and flexibility of CS value and comb offset allocation is preserved.

(II) $K_{\mathrm{TC}}$ is 4

When $K_{TC}$=4 $(n_{\mathrm{SRS}}^{\mathrm{cs},max} = 12)$, candidate $n_{\mathrm{SRS}}^{\mathrm{cs}}$ values may include 0, 1, 2, 3, 4, 5, 6, 7, 8, 9, 10, and 11, and the candidate $n_{\mathrm{SRS}}^{\mathrm{cs}}$ values may be divided into three sections, where the three sections may be [0, 1, 2], [3, 4, 5], and [6, 7, 8, 9, 10, 11] respectively, and $n_{\mathrm{SRS}}^{\mathrm{cs}}$ in each section corresponds to one SRS pattern.

In each SRS pattern, CS values occupied by eight SRS ports may be further defined based on $n_{\mathrm{SRS}}^{\mathrm{cs}}$. That the CS values occupied by the eight SRS ports are defined based on $\bar{k}_{\mathrm{TC}}$ may be: First, $n_{\mathrm{SRS}}^{\mathrm{cs},i}$ corresponding to each SRS port is defined based on $\bar{k}_{\mathrm{TC}}$, and then a CS value occupied by each SRS port is defined according to Formula 2 and based on $n_{\mathrm{SRS}}^{\mathrm{cs},i}$ corresponding to each SRS port. This embodiment of this application provides several definitions of $n_{\mathrm{SRS}}^{\mathrm{cs},i}$ of a $p_i$ port in an SRS resource as an example, and are shown as follows:

$$n_{\mathrm{SRS}}^{\mathrm{cs},i} = \left( n_{\mathrm{SRS}}^{\mathrm{cs}} + \frac{n_{\mathrm{SRS}}^{\mathrm{cs,max}} \lfloor (p_i - 1000)/2 \rfloor}{N_{\mathrm{ap}}^{\mathrm{SRS}}/2} \right) \bmod n_{\mathrm{SRS}}^{\mathrm{cs,max}},$$

$$n_{\mathrm{SRS}}^{\mathrm{cs},i} = \left( n_{\mathrm{SRS}}^{\mathrm{cs}} + \left\lfloor \frac{n_{\mathrm{SRS}}^{\mathrm{cs,max}} \lfloor (p_i - 1000)/2 \rfloor}{N_{\mathrm{ap}}^{\mathrm{SRS}}/2} \right\rfloor \right) \bmod n_{\mathrm{SRS}}^{\mathrm{cs,max}},$$

$$n_{\mathrm{SRS}}^{\mathrm{cs},i} = \left( n_{\mathrm{SRS}}^{\mathrm{cs}} + \left\lceil \frac{n_{\mathrm{SRS}}^{\mathrm{cs,max}} \lfloor (p_i - 1000)/2 \rfloor}{N_{\mathrm{ap}}^{\mathrm{SRS}}/2} \right\rceil \right) \bmod n_{\mathrm{SRS}}^{\mathrm{cs,max}},$$

$$n_{\mathrm{SRS}}^{\mathrm{cs},i} = \left( n_{\mathrm{SRS}}^{\mathrm{cs}} + \left\lceil \frac{n_{\mathrm{SRS}}^{\mathrm{cs,max}} (p_i - 1000)}{N_{\mathrm{ap}}^{\mathrm{SRS}}} \right\rceil \right) \bmod n_{\mathrm{SRS}}^{\mathrm{cs,max}},$$

or

$$n_{\mathrm{SRS}}^{\mathrm{cs},i} = \left( n_{\mathrm{SRS}}^{\mathrm{cs}} + \left\lfloor \frac{n_{\mathrm{SRS}}^{\mathrm{cs,max}} (p_i - 1000)}{N_{\mathrm{ap}}^{\mathrm{SRS}}} \right\rfloor \right) \bmod n_{\mathrm{SRS}}^{\mathrm{cs,max}}$$

The first definition in the foregoing definitions is simple, but may result in a plurality of ports on a same OFDM symbol having same CS values. Consequently, sequences of the plurality of ports on different subcarriers are the same (sent signals are the same), and a PAPR problem exists. In the two definitions following the first definition, this case can be effectively avoided. It should be understood that a CS value of each SRS pattern may be calculated based on any one of the foregoing definitions. This is not limited herein. A process of calculating the CS value of each SRS pattern is not described in detail below.

(1) When the section is [0, 1, 2], in other words, the N candidate cyclic shift offset values are 0, 1, and 2, the cyclic shift offset value may be one of 0, 1, and 2.

In this case, an SRS pattern corresponding to $n_{\mathrm{SRS}}^{\mathrm{cs}} \in [0, 1, 2]$ may be 1 symbol 2 comb 4 cs, to be specific, eight SRS ports in the SRS pattern corresponding to the candidate cyclic shift offset values 0, 1, and 2 occupy one OFDM symbol and two SRS combs on the OFDM symbol.

Comb positions of SRS combs occupied by the eight SRS ports may be further defined based on the comb offset value $\overline{k}_{\mathrm{TC}}$. A frequency domain start position $k_{\mathrm{TC}}^{(p_i)}$ of a $p_i$ port in an SRS resource may be defined as follows:

$$k_{\mathrm{TC}}^{(p_i)} = \begin{cases} \left(\overline{k}_{\mathrm{TC}} + K_{\mathrm{TC}}/2\right) \bmod K_{\mathrm{TC}} & \text{if } p_i \in \{1001, 1003, 1005, 1007\} \\ \overline{k}_{\mathrm{TC}} & \text{if } p_i \in \{1000, 1002, 1004, 1006\} \end{cases}$$

(2) When the section is [3, 4, 5], in other words, the N candidate cyclic shift offset values are 3, 4, and 5, the cyclic shift offset value may be one of 3, 4, and 5.

In this case, an SRS pattern corresponding to $n_{\mathrm{SRS}}^{\mathrm{cs}} \in [3, 4, 5]$ may be 2 symbol 1 comb 4 cs, to be specific, eight SRS ports in the SRS pattern corresponding to the candidate cyclic shift offset values 3, 4, and 5 occupy two OFDM symbols and one SRS comb on each OFDM symbol.

Comb positions of SRS combs occupied by the eight SRS ports may be further defined based on the comb offset value $\overline{k}_{\mathrm{TC}}$. A frequency domain start position $k_{\mathrm{TC}}^{(p_i)}$ of a $p_i$ port in an SRS resource may be defined as follows:

$$k_{\mathrm{TC}}^{(p_i)} = \overline{k}_{\mathrm{TC}}$$

In addition to the foregoing definitions, $n_{\mathrm{SRS}}^{\mathrm{cs},i}$ of a $p_i$ port in an SRS resource may alternatively be defined as follows:

$$n_{\mathrm{SRS}}^{\mathrm{cs},i} = \left( n_{\mathrm{SRS}}^{\mathrm{cs}} - 3 + \frac{n_{\mathrm{SRS}}^{\mathrm{cs,max}} \lfloor (p_i - 1000)/2 \rfloor}{N_{\mathrm{ap}}^{\mathrm{SRS}}/2} \right) \bmod n_{\mathrm{SRS}}^{\mathrm{cs,max}}$$

Symbol positions of OFDM symbols occupied by the eight SRS ports may be further defined based on symbol indication information $\overline{T}$. A symbol position $T^{(p_i)}$ of an OFDM symbol of a $p_i$ port in an SRS resource may be defined as follows:

$$T^{(p_i)} = \begin{cases} \overline{T} + 1 & \text{if } p_i \in \{1001, 1003, 1005, 1007\} \\ \overline{T} & \text{if } p_i \in \{1000, 1002, 1004, 1006\} \end{cases}$$

(3) When the section is [6, 7, 8, 9, 10, 11], in other words, the N candidate cyclic shift offset values are 6, 7, 8, 9, 10, and 11, the cyclic shift offset value may be one of 6, 7, 8, 9, 10, and 11.

In this case, an SRS pattern corresponding to $n_{\mathrm{SRS}}^{\mathrm{cs}} \in [6, 7, 8, 9, 10, 11]$ may be 4 symbol 1 comb 2 cs, to be specific, eight SRS ports in the SRS pattern corresponding to the candidate cyclic shift offset values 6, 7, 8, 9, 10, and 11 occupy four OFDM symbols and one SRS comb on each OFDM symbol.

Comb positions of SRS combs occupied by the eight SRS ports may be further defined based on the comb offset value $\overline{k}_{\mathrm{TC}}$. A frequency domain start position $k_{\mathrm{TC}}^{(p_i)}$ of a $p_i$ port in an SRS resource may be defined as follows:

$$k_{\mathrm{TC}}^{(p_i)} = \overline{k}_{\mathrm{TC}}$$

In addition to the foregoing definitions, $n_{\text{SRS}}^{\text{cs},i}$ of a $p_i$ port in an SRS resource may alternatively be defined as follows: $n_{\text{SRS}}^{\text{cs},i} = \left( n_{\text{SRS}}^{\text{cs}} - 6 + \frac{n_{\text{SRS}}^{\text{cs,max}} \lfloor (p_i - 1000)/2 \rfloor}{N_{\text{ap}}^{\text{SRS}}/2} \right) \bmod n_{\text{SRS}}^{\text{cs,max}}$. Symbol positions of OFDM symbols occupied by the eight SRS ports may be further defined based on symbol indication information $\overline{T}$. A symbol position $T^{(pi)}$ of an OFDM symbol of a $p_i$ port in an SRS resource may be defined as follows:

$$T^{(p_i)} = \begin{cases} \overline{T} + 3 & \text{if } p_i \in \{1003, 1007\} \\ \overline{T} + 2 & \text{if } p_i \in \{1001, 1005\} \\ \overline{T} + 1 & \text{if } p_i \in \{1002, 1006\} \\ \overline{T} & \text{if } p_i \in \{1000, 1004\} \end{cases}$$

(III) $K_{\text{TC}} = 8$

When $K_{TC}=8$ $(n_{\text{SRS}}^{\text{cs},max} = 6)$., candidate $n_{\text{SRS}}^{\text{cs}}$ values (that is, the N candidate cyclic shift offset values described above) may include 0, 1, 2, 3, 4, and 5. The candidate $n_{\text{SRS}}^{\text{cs}}$ values may be divided into two sections, where the two sections may be [0, 1, 2] and [3, 4, 5] respectively, and $n_{\text{SRS}}^{\text{cs}}$ in each section corresponds to one or more SRS patterns.

(1) When the section is [0, 1, 2], in other words, the N candidate cyclic shift offset values are 0, 1, and 2, the cyclic shift offset value may be one of 0, 1, and 2.

For example, that $n_{\text{SRS}}^{\text{cs}} \in [0, 1, 2]$ may correspond to two SRS patterns, and the two SRS patterns may be defined based on the comb offset value $\overline{k}_{\text{TC}}$. Details may be as follows.

When $\overline{k}_{\text{TC}} \in [0, 1, 2, 3]$, that $n_{\text{SRS}}^{\text{cs}} \in [0, 1, 2]$ corresponds to a first SRS pattern, and the first SRS pattern is 4 symbol 1 comb 2 cs. To be specific, eight SRS ports in the SRS pattern corresponding to the candidate cyclic shift offset values 0, 1, and 2 occupy four OFDM symbols and one SRS comb on each OFDM symbol.

Comb positions of SRS combs occupied by the eight SRS ports may be further defined based on the comb offset value $\overline{k}_{\text{TC}}$. A frequency domain start position $k_{\text{TC}}^{(p_i)}$ of a $p_i$ port in an SRS resource may be defined as follows:

$$k_{\text{TC}}^{(p_i)} = \begin{cases} \left( \overline{k}_{\text{TC}} + 3K_{\text{TC}}/4 \right) \bmod K_{\text{TC}} & \text{if } p_i \in \{1003, 1007\} \\ \left( \overline{k}_{\text{TC}} + K_{\text{TC}}/2 \right) \bmod K_{\text{TC}} & \text{if } p_i \in \{1000, 1005\} \\ \left( \overline{k}_{\text{TC}} + K_{\text{TC}}/4 \right) \bmod K_{\text{TC}} & \text{if } p_i \in \{1002, 1006\} \\ \overline{k}_{\text{TC}} & \text{if } p_i \in \{1000, 1004\} \end{cases}$$

When $\overline{k}_{\text{TC}} \in [4, 5, 6, 7]$, that $n_{\text{SRS}}^{\text{cs}} \in [0, 1, 2]$ corresponds to a second SRS pattern, and the second SRS pattern is 2 symbol 2 comb 2 cs. To be specific, eight SRS ports in the SRS pattern corresponding to the candidate cyclic shift offset values 0, 1, and 2 occupy two OFDM symbols and two SRS combs on each OFDM symbol.

Comb positions of SRS combs occupied by the eight SRS ports may be further defined based on the comb offset value $\overline{k}_{\text{TC}}$. A frequency domain start position $k_{\text{TC}}^{(p_i)}$ of a $p_i$ port in an SRS resource may be defined as follows:

$$k_{\text{TC}}^{(p_i)} = \begin{cases} \left( \overline{k}_{\text{TC}} + K_{\text{TC}}/2 \right) \bmod K_{\text{TC}} & \text{if } p_i \in \{1002, 1003, 1006, 1007\} \\ \overline{k}_{\text{TC}} & \text{if } p_i \in \{1000, 1001, 1004, 1005\} \end{cases}$$

Symbol positions of OFDM symbols occupied by the eight SRS ports may be further defined based on symbol

indication information $\overline{T}$. A symbol position $T^{(pi)}$ of an OFDM symbol of a p$_i$ port in an SRS resource may be defined as follows:

$$T^{(p_i)} = \begin{cases} \overline{T} + 1 & \text{if } p_i \in \{1001, 1003, 1005, 1007\} \\ \overline{T} & \text{if } p_i \in \{1000, 1002, 1004, 1006\} \end{cases}$$

(2) When the section is [3, 4, 5], in other words, the N candidate cyclic shift offset values are 3, 4, and 5, the cyclic shift offset value may be one of 3, 4, and 5.

In this case, an SRS pattern corresponding to $n_{\text{SRS}}^{\text{cs}} \in [3, 4, 5]$ may be 4 symbol 1 comb 2 cs, to be specific, eight SRS ports in the SRS pattern corresponding to the candidate cyclic shift offset values 3, 4, and 5 occupy four OFDM symbols and one SRS comb on each OFDM symbol.

Comb positions of SRS combs occupied by the eight SRS ports may be further defined based on the comb offset value $\overline{k}_{\text{TC}}$. A frequency domain start position $k_{\text{TC}}^{(p_i)}$ of a p$_i$ port in an SRS resource may be defined as follows:

$$k_{\text{TC}}^{(p_i)} = \overline{k}_{\text{TC}}$$

Symbol positions of OFDM symbols occupied by the eight SRS ports may be further defined based on symbol indication information $\overline{T}$. A symbol position $T^{(pi)}$ of an OFDM symbol of a p$_i$ port in an SRS resource may be defined as follows:

$$T^{(p_i)} = \begin{cases} \overline{T} + 3 & \text{if } p_i \in \{1003, 1007\} \\ \overline{T} + 2 & \text{if } p_i \in \{1001, 1005\} \\ \overline{T} + 1 & \text{if } p_i \in \{1002, 1006\} \\ \overline{T} & \text{if } p_i \in \{1000, 1004\} \end{cases}$$

**Step S402: The terminal device determines the target pattern from the M SRS patterns based on the cyclic shift offset value.**

It should be understood that determining the target pattern from the M SRS patterns may also be understood as determining a target quantity of OFDM symbols and a target quantity of combs from M groups of different quantities of OFDM symbols and different quantities of combs.

When the cyclic shift offset value corresponds to one SRS pattern in the M SRS patterns, the terminal device may determine the SRS pattern as the target pattern. For example, in an example of step S401, 8 ports, comb spacing $K_{\text{TC}}$ =8, and $n_{\text{SRS}}^{\text{cs}} \in [3, 4, 5]$ correspond to one SRS pattern, that is, 4 symbol 1 comb 2 cs. Therefore, when the cyclic shift offset value is any one of 3, 4, and 5, the target pattern may be 4 symbol 1 comb 2 cs.

When the cyclic shift offset value corresponds to a plurality of SRS patterns in the M SRS patterns, the network device may send a second comb offset value to the terminal device. Correspondingly, the terminal device receives the second comb offset value. The second comb offset value is used to determine the target pattern from the plurality of SRS patterns. For example, in an example of step S401, 8 ports, comb spacing $K_{\text{TC}}$ =8, and $n_{\text{SRS}}^{\text{cs}} \in [0, 1, 2]$ correspond to two SRS patterns, and the two SRS patterns are respectively 4 symbol 1 comb 2 cs and 2 symbol 2 comb 2 cs. When the second comb offset value $\overline{k}_{\text{TC}} \in$ [0, 1, 2, 3], the target pattern may be 4 symbol 1 comb 2 cs. When the second comb offset value $\overline{k}_{\text{TC}} \in$ [4, 5, 6, 7], the target pattern may be 2 symbol 2 comb 2 cs.

Optionally, the second comb offset value is one of C candidate comb offset values, the C candidate comb offset values correspond to the plurality of SRS patterns, and C is an integer greater than 1. A quantity of combs corresponding to each of the plurality of SRS patterns is greater than 1. Optionally, a quantity of candidate comb offset values corresponding to a same SRS pattern is not less than $\dfrac{K_{TC}*n_{OFDM}*n_{comb}}{n_p}$ . $K_{\text{TC}}$ is a comb spacing supported on one OFDM symbol, $n_{OFDM}$ is a quantity of OFDM symbols corresponding to the SRS pattern, $n_{comb}$ is a quantity of combs corresponding to the SRS pattern, and $n_p$ is a quantity of SRS ports in an SRS resource.

Optionally, in the target pattern, when a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol may correspond to different cyclic shift values.

In the target pattern, when the quantity of OFDM symbols occupied by the at least two SRS ports is at least two, the network device may send OFDM symbol indication information to the terminal device. The OFDM symbol indication information indicates a position of an OFDM symbol occupied by each SRS port in the at least two SRS ports, and the SRS is sent based on the position of the OFDM symbol occupied by each SRS port. For example, the OFDM symbol indication information may be $\overline{T}$ described above.

In an implementation, the network device may further send a first comb offset value to the terminal device. The first comb offset value is used to determine a position of an SRS comb and a cyclic shift value that are occupied by each SRS port in the at least two SRS ports, so that the terminal device sends the SRS based on the target pattern, the position of the SRS comb, and the cyclic shift value. For example, when the comb spacing $K_{TC}=2$ and $n_{SRS}^{cs} \in [1]$, the target pattern may be 1 symbol 2 comb 4 cs. In this case, the CS values occupied by the eight SRS ports may be determined based on the comb offset value $\overline{k}_{TC}$. For details, refer to the foregoing content related to defining, when the comb spacing $K_{TC}=2$ and $n_{SRS}^{cs} \in [1]$, the CS values occupied by the eight SRS ports.

**Step S403: The terminal device sends the SRS to the network device based on the target pattern.**

Correspondingly, the network device receives the SRS from the terminal device.

In this embodiment of this application, the candidate cyclic shift offset values are divided into a plurality of (two or more) sections, and different sections correspond to different SRS patterns. According to the method, a redundancy indication ( $n_{SRS}^{cs}$ or $\overline{k}_{TC}$) is reused to reduce indication overheads and complexity, to ensure flexibility of resource allocation.

It should be understood that same or corresponding information in the foregoing different embodiments or different positions may be mutually referenced in some cases.

It should be understood that a function performed by the network device in the foregoing sounding reference signal SRS transmission method may alternatively be performed by a module (for example, a chip) in the network device, or may be performed by a logical module or software that can implement all or some functions of the network device. A function performed by the terminal device may alternatively be performed by a module (for example, a chip) in the terminal device, or may be performed by a logical module or software that can implement all or some functions of the terminal device.

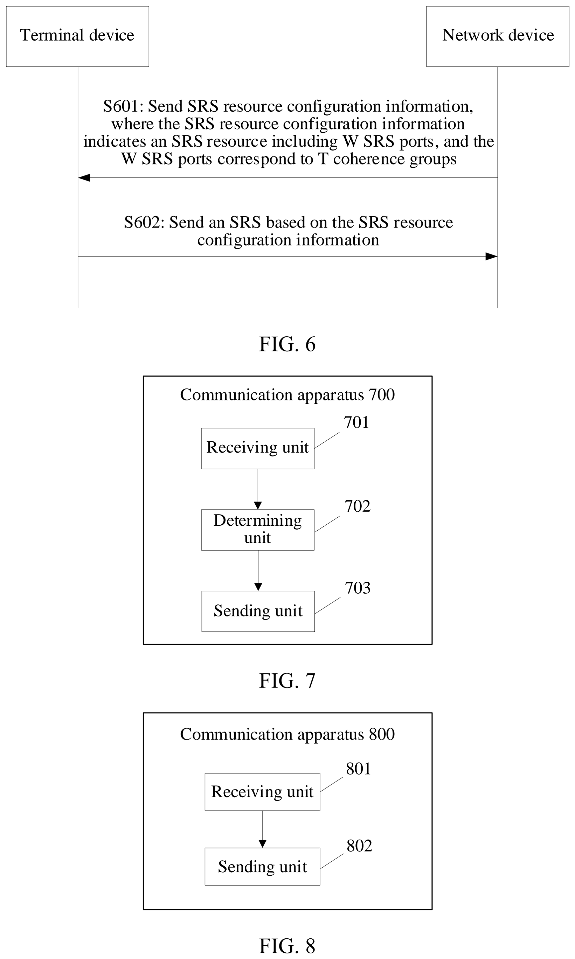

Based on the foregoing network architecture, FIG. 6 is a schematic flowchart of another sounding reference signal SRS transmission method according to an embodiment of this application. As shown in FIG. 6, the method may include the following steps.

**Step S601: The network device sends SRS resource configuration information to the terminal device, where the SRS resource configuration information indicates an SRS resource including W SRS ports, and the W SRS ports correspond to T coherence groups.**

Correspondingly, the terminal device receives the SRS resource configuration information sent by the network device.

The SRS resource configuration information indicates the SRS resource including the W SRS ports, W is an even number greater than or equal to 4, the SRS resource occupies Q first OFDM symbols in one slot slot, and Q is an even number greater than or equal to 2. SRS ports on the Q first OFDM symbols are different from each other, the SRS ports on the Q first OFDM symbols occupy a same resource block RB, and a quantity of SRS ports on each first OFDM symbol is W/Q, and W/Q is an integer. The W SRS ports correspond to the T coherence groups, and T is an even number greater than 1 and less than W. A quantity of first OFDM symbols occupied by an SRS port corresponding to each coherence group in the T coherence groups is less than Q.

Optionally, a correspondence between the W SRS ports and the T coherence groups may be predefined. For example, the terminal device may report a coherence capability of the terminal device, that is, a value of T. In other words, the W SRS ports that can be supported by the terminal device need to be grouped into the T coherence groups. The terminal device may determine a mapping relationship between transmit antennas of the terminal device and the W SRS ports based on the correspondence between the W SRS ports and the T coherence groups. Optionally, SRS ports in one coherence group may correspond to transmission of a same uplink data stream, and SRS ports in different coherence groups need to correspond to transmission of different uplink data streams.

Optionally, that W/Q is an integer may also be understood as, it is pre-agreed that values of W and Q need to satisfy: W is exactly divisible by Q.

Optionally, the Q first OFDM symbols need to satisfy: SRS ports corresponding to any two of the Q first OFDM symbols are different from each other.

When the quantity Q of first OFDM symbols is not greater than the quantity T of coherence groups, an SRS port corresponding to each coherence group in the T coherence groups may occupy a same OFDM symbol. For example, each first OFDM symbol may carry one or more coherence groups, and a quantity of coherence groups carried on each first OFDM symbol is less than the quantity T of coherence groups.

When the quantity Q of first OFDM symbols is greater than the quantity T of coherence groups, an SRS port corresponding to one coherence group in the T coherence groups may occupy K consecutive OFDM symbols. K may be Q/T, and Q/T is an integer. For example, if Q is 4 (that is, four first OFDM symbols), T is 2 (two coherence groups), and W is 8 (8 ports), K is 2, a quantity of SRS ports on each first OFDM symbol is W/Q (that is, 2), and an SRS port corresponding to each coherence group in the two coherence groups may occupy two consecutive OFDM symbols, and one OFDM symbol in the occupied two consecutive OFDM symbols is occupied by two ports in one coherence group. For another example, when Q is 2 and T is 2, K is 1. If W is 8 (8 ports), in other words, a quantity of SRS ports on each first OFDM symbol is W/Q (that is, 4), an SRS port corresponding to each coherence group in the four coherence groups may occupy one OFDM symbol. When Q is 2 and T is 4, K is 1/2. If W is 8 (8 ports), in other words, a quantity of SRS ports on each first OFDM symbol is W/Q (that is, 4), an SRS port corresponding to each coherence group in the four coherence groups may occupy 1/2 OFDM symbols. When Q is 4 and T is 4, K is 1. If W is 8 (8 ports), in other words, a quantity of SRS ports on each first OFDM symbol is W/Q (that is, 2), an SRS port corresponding to each coherence group in the two coherence groups may occupy one OFDM symbol.

Optionally, the SRS resource may occupy a plurality of combs on each first OFDM symbol, or an SRS port corresponding to each coherence group may be on one comb on each first OFDM symbol.

When the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups. In other words, only when a quantity of CS values available for the SRS resource in one comb is greater than a quantity of ports in one coherence group, ports in one coherence group are carried on a plurality of combs; otherwise, ports in one coherence group are carried on only one comb.

When the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols. For example, Q is 2, R=1, and two first OFDM symbols are respectively an OFDM symbol #1 and an OFDM symbol #2. For another example, Q is 2, R=4, two first OFDM symbols are respectively an OFDM symbol #1 and an OFDM symbol #5, and OFDM symbols #2 to 4 and OFDM symbols #6 to 8 are respectively used for repeated transmission of the OFDM symbol #1 and the OFDM symbol #5. In other words, three consecutive symbols following the OFDM symbol #1 are three consecutive OFDM symbols #1, and three consecutive symbols following the OFDM symbol #2 are three consecutive OFDM symbols #2. In this case, that the terminal device sends an SRS based on the SRS resource configuration information may be to first send four OFDM symbols #1 and then send four OFDM symbols #2, or first send four OFDM symbols #2 and then send four OFDM symbols #1. It should be understood that a minimum interval between the Q first OFDM symbols is R-1 symbols. Specifically, for each first OFDM symbol, R-1 consecutive symbols following each first OFDM symbol are used for repeated transmission of the first OFDM symbol.

When the SRS resource configuration information further indicates that repeated transmission is not configured or a configured quantity R of repeated transmissions is 1, the Q first OFDM symbols are consecutive OFDM symbols.

In an implementation, R and Q are notified by the network device by using a higher layer parameter.

In an implementation, a quantity P of frequency hoppings may be further configured. In this case, a quantity of symbols occupied by the SRS in one frequency hopping period is Q*R*P, OFDM symbols corresponding to each frequency hopping are Q*R consecutive symbols, RB positions corresponding to different frequency hoppings are different, and corresponding Q*R consecutive symbols do not overlap.

In an implementation, T may be determined based on a repetition factor R and then based on an SRS pattern determined by using the method shown in FIG. 4. In this case, it may be obtained that an actual quantity of repetitions is R/T, and it needs to be pre-agreed that R is exactly divisible by T. An actual mapping may be as follows.

An example in which $K_{TC}=2$, the SRS pattern is 4 symbol 1 comb 2 cs, and R=4 is used, in this case, four OFDM symbols on one SRS transmission occasion (four consecutive OFDM symbols) are used to carry eight SRS ports, and repeated transmission is not performed.

An example in which $K_{TC}=2$, the SRS pattern is 4 symbol 1 comb 2 cs, and R=8 is used, in this case, a 1st OFDM symbol and a 2nd OFDM symbol on one SRS transmission occasion (eight consecutive OFDM symbols) are used to carry SRS ports 1000 and 1004, and repeated transmission of the 2nd OFDM symbol is performed; a 3rd OFDM symbol and a 4th OFDM symbol are used to carry SRS ports 1002 and 1006, and repeated transmission of the 4th OFDM symbol is performed; a 5th OFDM symbol and a 6th OFDM symbol are used to carry SRS ports 1001 and 1005, and repeated transmission of the 6th OFDM symbol is performed; and a 7th OFDM symbol and an 8th OFDM symbol are used to carry SRS ports 1003 and 1007, and repeated transmission of the 8th OFDM symbol is performed.

Optionally, for Q=2, symbol positions of OFDM symbols occupied by the eight SRS ports may be further defined based on symbol indication information $\overline{T}$. A symbol position of an OFDM symbol of a $p_i$ port in an SRS resource may be defined as follows:

$$T^{(p_i)} = \begin{cases} \overline{T} + 1 & \text{if } p_i \in \{1001, 1003,1005,1007\} \\ \overline{T} & \text{if } p_i \in \{1000, 1002,1004,1006\} \end{cases}$$

Optionally, comb positions of SRS combs occupied by the eight SRS ports may be further defined based on a comb offset value $\overline{k}_{\text{TC}}$. A frequency domain start position $k_{\text{TC}}^{(p_i)}$ of a $p_i$ port in an SRS resource may be defined as follows:

$$k_{\text{TC}}^{(p_i)} = \begin{cases} (\overline{k}_{\text{TC}} + K_{\text{TC}}/2) \bmod K_{\text{TC}} & \text{if } p_i \in \{1002, 1003,1006,1007\} \\ \overline{k}_{\text{TC}} & \text{if } p_i \in \{1000, 1001,1004,1005\} \end{cases}$$

Optionally, for Q=4, symbol positions of OFDM symbols occupied by the eight SRS ports may be further defined based on symbol indication information $\overline{T}$. A symbol position of an OFDM symbol of a $p_i$ port in an SRS resource may be defined as follows:

$$T^{(p_i)} = \begin{cases} \overline{T} + 3 & \text{if } p_i \in \{1003,1007\} \\ \overline{T} + 2 & \text{if } p_i \in \{1001, 1005\} \\ \overline{T} + 1 & \text{if } p_i \in \{1002, 1006\} \\ \overline{T} & \text{if } p_i \in \{1000, 1004\} \end{cases}$$

Optionally, CS values occupied by the eight SRS ports may be further defined based on $n_{\text{SRS}}^{\text{cs}}$.

$$n_{\text{SRS}}^{\text{cs},i} = \left( n_{\text{SRS}}^{\text{cs}} + \left\lceil \frac{n_{\text{SRS}}^{\text{cs,max}}(p_i - 1000)}{N_{\text{ap}}^{\text{SRS}}} \right\rceil \right) \bmod n_{\text{SRS}}^{\text{cs,max}},$$

or

$$n_{\text{SRS}}^{\text{cs},i} = \left( n_{\text{SRS}}^{\text{cs}} + \left\lfloor \frac{n_{\text{SRS}}^{\text{cs,max}}(p_i - 1000)}{N_{\text{ap}}^{\text{SRS}}} \right\rfloor \right) \bmod n_{\text{SRS}}^{\text{cs,max}}$$

Because signals received on a plurality of OFDM symbols need to be coherently combined for repeated transmission, it is necessary to ensure that amplitudes and phases of channels on the plurality of OFDM symbols are consistent. In this case, consecutive OFDM symbols may be provided for repeated transmission. In addition, considering that it is also needed to simultaneously measure channels of a plurality of transmit antennas and perform unified processing to obtain precoding, it may be preferentially ensured that a coherence group occupies as close OFDM symbols as possible.

**Step S602: The terminal device sends the SRS based on the SRS resource configuration information.**

Correspondingly, the network device receives the SRS sent by the terminal device.

It should be understood that same or corresponding information in the foregoing different embodiments or different positions may be mutually referenced in some cases.

It should be understood that a function performed by the network device in the foregoing sounding reference signal SRS transmission method may alternatively be performed by a module (for example, a chip) in the network device, or may be performed by a logical module or software that can implement all or some functions of the network device. A function performed by the terminal device may alternatively be performed by a module (for example, a chip) in the terminal device, or may be performed by a logical module or software that can implement all or some functions of the terminal device.

FIG. 7 is a diagram of a structure of a sounding reference signal SRS transmission apparatus according to an embodiment of this application. The apparatus may be a terminal device, or may be a module (for example, a chip) in the terminal device. As shown in FIG. 7, the apparatus 700 includes at least a receiving unit 701, a determining unit 702, and a sending unit 703.

The receiving unit 701 is configured to receive a cyclic shift offset value sent by a network device, where the cyclic shift offset value is one of N candidate cyclic shift offset values.

The N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2.

The determining unit 702 is configured to determine a target pattern from the M SRS patterns based on the cyclic shift offset value.

The sending unit 703 is configured to send an SRS based on the target pattern.

In a possible implementation, at least two SRS patterns in the M SRS patterns have different quantities of OFDM symbols.

In a possible implementation, the receiving unit 701 is further configured to:

receive a first comb offset value sent by the network device.

The first comb offset value is used to determine a position of an SRS comb and a cyclic shift value that are occupied by each SRS port in the at least two SRS ports.

The sending unit 703 is specifically configured to send the SRS based on the target pattern, the position of the SRS comb, and the cyclic shift value.

The cyclic shift offset value corresponds to a plurality of SRS patterns in the M SRS patterns, and the receiving unit 701 is further configured to:

receive a second comb offset value sent by the network device.

The second comb offset value is used to determine the target pattern from the plurality of SRS patterns.

In a possible implementation, in the target pattern, a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol correspond to different cyclic shift values.

In a possible implementation, in the target pattern, the quantity of OFDM symbols occupied by the at least two SRS ports is at least two, and the receiving unit 701 is further configured to:

receive OFDM symbol indication information sent by the network device, where the OFDM symbol indication information indicates a position of an OFDM symbol occupied by each SRS port in the at least two SRS ports, and the SRS is sent based on the position of the OFDM symbol occupied by each SRS port.

For more detailed descriptions of the receiving unit 701, the determining unit 702, and the sending unit 703, directly refer to related descriptions of the terminal device in the method embodiment shown in FIG. 4. Details are not described herein again.

FIG. 8 is a diagram of a structure of another sounding reference signal SRS transmission apparatus according to an embodiment of this application. The apparatus may be a network device, or may be a module (for example, a chip) in the network device. As shown in FIG. 8, the apparatus 800 includes at least a receiving unit 801 and a sending unit 802.

The receiving unit 801 is configured to receive SRS resource configuration information sent by a network device, where the SRS resource configuration information indicates an SRS resource including W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer.

The W SRS ports correspond to T coherence groups, T is an even number greater than 1 and less than W, and a quantity of first OFDM symbols occupied by an SRS port corresponding to each coherence group in the T coherence groups is less than Q.

The sending unit 802 is configured to send an SRS based on the SRS resource configuration information.

In a possible implementation, Q is not greater than T, and an SRS port corresponding to each coherence group in the T coherence groups occupies a same OFDM symbol.

In a possible implementation, Q is greater than T, an SRS port corresponding to one coherence group in the T coherence groups occupies K consecutive OFDM symbols, K is Q/T, and Q/T is an integer.

In a possible implementation, the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

In a possible implementation, an SRS port corresponding to each coherence group is on one comb on each first OFDM symbol.

In a possible implementation, the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

In a possible implementation, the SRS resource configuration information further indicates that repeated transmission is not configured or a configured quantity R of repeated transmissions is 1, and the Q first OFDM symbols are consecutive OFDM symbols.

For more detailed descriptions of the receiving unit 801 and the sending unit 802, directly refer to related descriptions of the network device in the method embodiment shown in FIG. 4. Details are not described herein again.

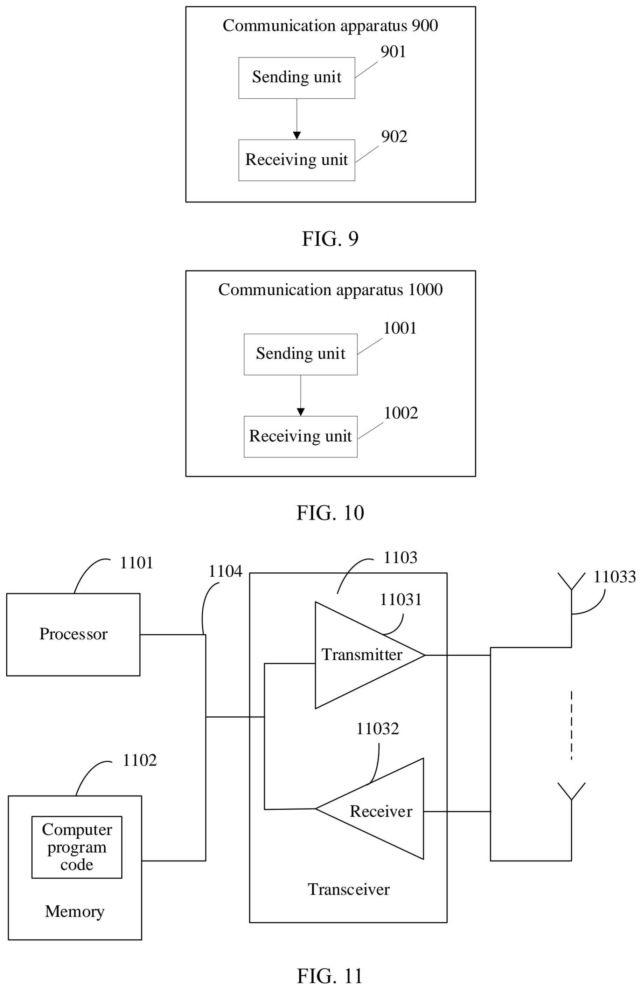

FIG. 9 is a diagram of a structure of still another sounding reference signal SRS transmission apparatus according to an embodiment of this application. The apparatus may be a terminal device, or may be a module (for example, a chip) in the terminal device. As shown in FIG. 9, the apparatus 900 includes at least a sending unit 901 and a receiving unit 902.

The sending unit 901 is configured to send a cyclic shift offset value to a terminal device, where the cyclic shift offset value is one of N candidate cyclic shift offset values.

The N candidate cyclic shift offset values correspond to M SRS patterns, each SRS pattern in the M SRS patterns includes a quantity of OFDM symbols and a quantity of SRS combs that are occupied by at least two SRS ports, the at least two SRS ports belong to a same SRS resource, N is greater than or equal to M, and M is an integer not less than 2.

The receiving unit 902 is configured to receive an SRS sent by the terminal device, where the SRS is sent based on a target pattern, and the target pattern is determined from the M SRS patterns based on the cyclic shift offset value.

In a possible implementation, at least two SRS patterns in the M SRS patterns have different quantities of OFDM symbols.

In a possible implementation, the sending unit is further configured to send a first comb offset value to the terminal device.

The first comb offset value is used to determine a position of an SRS comb and a cyclic shift value that are occupied by each SRS port in the at least two SRS ports, and the SRS is sent based on the target pattern, the position of the SRS comb, and the cyclic shift value.

In a possible implementation, the cyclic shift offset value corresponds to a plurality of SRS patterns in the M SRS patterns, and the sending unit is further configured to send a second comb offset value to the terminal device.

The second comb offset value is used to determine the target pattern from the plurality of SRS patterns.

In a possible implementation, in the target pattern, a quantity of OFDM symbols occupied by the at least two SRS ports is at least two, the at least two SRS ports occupy at least two OFDM symbols, the at least two OFDM symbols include a first symbol and a second symbol, and an SRS port occupying the first symbol and an SRS port occupying the second symbol correspond to different cyclic shift values.

In a possible implementation, in the target pattern, the quantity of OFDM symbols occupied by the at least two SRS ports is at least two, and the sending unit is further configured to send OFDM symbol indication information to the terminal device, where the OFDM symbol indication information indicates a position of an OFDM symbol occupied by each SRS port in the at least two SRS ports, and the SRS is sent based on the position of the OFDM symbol occupied by each SRS port.

For more detailed descriptions of the sending unit 901 and the receiving unit 902, directly refer to related descriptions of the terminal device in the method embodiment shown in FIG. 6. Details are not described herein again.

FIG. 10 is a diagram of a structure of still another sounding reference signal SRS transmission apparatus according to an embodiment of this application. The apparatus may be a network device, or may be a module (for example, a chip) in the network device. As shown in FIG. 10, the apparatus 1000 includes at least a sending unit 1001 and a receiving unit 1002.

The sending unit 1001 is configured to send SRS resource configuration information to a terminal device, where the SRS resource configuration information indicates an SRS resource including W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer.

The W SRS ports correspond to T coherence groups, T is an even number greater than 1 and less than W, and a quantity of first OFDM symbols occupied by an SRS port corresponding to each coherence group in the T coherence groups is less than Q.

The receiving unit 1002 is configured to receive an SRS sent by the terminal device, where the SRS is sent based on the SRS resource configuration information.

In a possible implementation, Q is not greater than T, and an SRS port corresponding to each coherence group in the T coherence groups occupies a same OFDM symbol.

In a possible implementation, Q is greater than T, an SRS port corresponding to one coherence group in the T coherence groups occupies K consecutive OFDM symbols, K is Q/T, and Q/T is an integer.

In a possible implementation, the SRS resource occupies a plurality of combs on each first OFDM symbol, the T coherence groups include a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

In a possible implementation, an SRS port corresponding to each coherence group is on one comb on each first OFDM symbol.

In a possible implementation, the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

In a possible implementation, the SRS resource configuration information further indicates that repeated transmission is not configured or a configured quantity R of repeated transmissions is 1, and the Q first OFDM symbols are consecutive OFDM symbols.

For more detailed descriptions of the sending unit 1001 and the receiving unit 1002, directly refer to related descriptions of the network device in the method embodiment shown in FIG. 6. Details are not described herein again.

Based on the foregoing network architecture, FIG. 11 is a diagram of a structure of another sounding reference signal SRS transmission apparatus according to an embodiment of this application. As shown in FIG. 11, the sounding reference signal SRS transmission apparatus may include a processor 1101, a memory 1102, a transceiver 1103, and a bus 1104. The memory 1102 may exist independently, and may be connected to the processor 1101 through the bus 1104. The memory 1102 may alternatively be integrated with the processor 1101. The bus 1104 is configured to implement connections between these components. In a case, as shown in FIG. 11, the transceiver 1103 may include a transmitter 11031, a receiver 11032, and an antenna 11033. In another case, the transceiver 1103 may include a transmitter machine (namely, an output interface) and a receiver machine (namely, an input interface). The transmitter machine may include a transmitter and an antenna, and the receiver machine may include a receiver and an antenna.

The sounding reference signal SRS transmission apparatus may be a terminal device, or may be a module in the terminal device. When computer program instructions stored in the memory 1102 are executed, the processor 1101 may be configured to perform the foregoing embodiments, and the transceiver 1103 may be configured to perform operations performed by the receiving unit 701 and the sending unit 703 or the sending unit 901 and the receiving unit 902 in the foregoing embodiments. The sounding reference signal SRS transmission apparatus may be further configured to perform various methods performed by the terminal device in the method embodiments in FIG. 4 to FIG. 6. Details are not described again.

The sounding reference signal SRS transmission apparatus may be a network device, or may be a module in the network device. When computer program instructions stored in the memory 1102 are executed, the processor 1101 may be configured to perform the foregoing embodiments, and the transceiver 1103 may be configured to perform operations performed by the receiving unit 801 and the sending unit 802 or the sending unit 1001 and the receiving unit 1002 in the foregoing embodiments. The sounding reference signal SRS transmission apparatus may be further configured to perform various methods performed by the network device in the method embodiments in FIG. 4 to FIG. 6. Details are not described again.

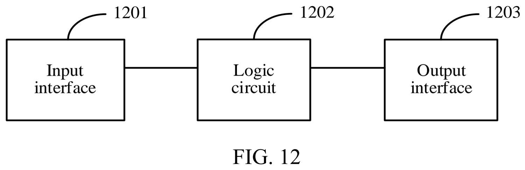

Based on the foregoing network architecture, FIG. 12 is a diagram of a structure of still another sounding reference signal SRS transmission apparatus according to an embodiment of this application. As shown in FIG. 12, the sounding reference signal SRS transmission apparatus may include an input interface 1201, a logic circuit 1202, and an output interface 1203. The input interface 1201 is connected to the output interface 1203 through the logic circuit 1202. The input interface 1201 is configured to receive information from another sounding reference signal SRS transmission apparatus, and the output interface 1203 is configured to output, schedule, or send information to the another sounding reference signal SRS transmission apparatus. The logic circuit 1202 is configured to perform an operation other than operations of the input interface 1201 and the output interface 1203, for example, implement a function implemented by the processor 1101 in the foregoing embodiment. The sounding reference signal SRS transmission apparatus may be a terminal device (or a module in the terminal device), or may be a network device (or a module in the network device). For more detailed descriptions of the input interface 1201, the logic circuit 1202, and the output interface 1203, directly refer to related descriptions of the terminal device and the network device in the foregoing method embodiments. Details are not described herein again.

An embodiment of this application further discloses a computer-readable storage medium storing instructions. When the instructions are executed, the method in the foregoing method embodiments is performed.

An embodiment of this application further discloses a computer program product including instructions. When the instructions are executed, the method in the foregoing method embodiments is performed.

An embodiment of this application further discloses a communication system. The communication system may include a network device and a terminal device. For detailed descriptions, refer to the sounding reference signal SRS transmission method shown in FIG. 4 to FIG. 6.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A sounding reference signal SRS transmission method, wherein the method comprises:

   receiving a cyclic shift offset value sent by a network device, wherein the cyclic shift offset value is one of N candidate cyclic shift offset values, wherein
   the N candidate cyclic shift offset values correspond to M SRS patterns, each SRS pattern in the M SRS patterns comprises a quantity of OFDM symbols and a quantity of SRS combs that are occupied by at least two SRS ports, the at least two SRS ports belong to a same SRS resource, N is greater than or equal to M, and M is an integer not less than 2;
   determining a target pattern from the M SRS patterns based on the cyclic shift offset value; and
   sending an SRS based on the target pattern.

2. The method according to claim 1, wherein at least two SRS patterns in the M SRS patterns have different quantities of OFDM symbols.

3. The method according to claim 1 or 2, wherein the method further comprises:

   receiving a first comb offset value sent by the network device, wherein
   the first comb offset value is used to determine a position of an SRS comb and a cyclic shift value that are occupied by each SRS port in the at least two SRS ports; and
   sending the SRS based on the target pattern comprises: sending the SRS based on the target pattern, the position of the SRS comb, and the cyclic shift value.

4. The method according to claim 1 or 2, wherein the cyclic shift offset value corresponds to a plurality of SRS patterns in the M SRS patterns, and the method further comprises:

   receiving a second comb offset value sent by the network device, wherein
   the second comb offset value is used to determine the target pattern from the plurality of SRS patterns.

5. The method according to any one of claims 1 to 4, wherein in the target pattern, a quantity of OFDM symbols occupied by the at least two SRS ports is at least two, the at least two SRS ports occupy at least two OFDM symbols, the at least two OFDM symbols comprise a first symbol and a second symbol, and an SRS port occupying the first symbol and an SRS port occupying the second symbol correspond to different cyclic shift values.

6. The method according to any one of claims 1 to 5, wherein in the target pattern, the quantity of OFDM symbols occupied by the at least two SRS ports is at least two, and the method further comprises:
   receiving OFDM symbol indication information sent by the network device, wherein the OFDM symbol indication information indicates a position of an OFDM symbol occupied by each SRS port in the at least two SRS ports, and the SRS is sent based on the position of the OFDM symbol occupied by each SRS port.

7. A sounding reference signal SRS transmission method, wherein the method comprises:

   receiving SRS resource configuration information sent by a network device, wherein the SRS resource configuration information indicates an SRS resource comprising W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, wherein
   the W SRS ports correspond to T coherence groups, T is an even number greater than 1 and less than W, and a quantity of first OFDM symbols occupied by an SRS port corresponding to each coherence group in the T coherence groups is less than Q; and

sending an SRS based on the SRS resource configuration information.

8. The method according to claim 7, wherein Q is not greater than T, and the SRS port corresponding to each coherence group in the T coherence groups occupies a same OFDM symbol.

9. The method according to claim 7, wherein Q is greater than T, an SRS port corresponding to one coherence group in the T coherence groups occupies K consecutive OFDM symbols, K is Q/T, and Q/T is an integer.

10. The method according to any one of claims 7 to 9, wherein the SRS resource occupies a plurality of combs on each first OFDM symbol, the T coherence groups comprise a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

11. The method according to any one of claims 7 to 9, wherein the SRS port corresponding to each coherence group is on one comb on each first OFDM symbol.

12. The method according to any one of claims 7 to 11, wherein the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

13. The method according to any one of claims 7 to 11, wherein the SRS resource configuration information further indicates that repeated transmission is not configured or a configured quantity R of repeated transmissions is 1, and the Q first OFDM symbols are consecutive OFDM symbols.

14. A sounding reference signal SRS transmission method, wherein the method comprises:

sending a cyclic shift offset value to a terminal device, wherein the cyclic shift offset value is one of N candidate cyclic shift offset values, wherein
the N candidate cyclic shift offset values correspond to M SRS patterns, each SRS pattern in the M SRS patterns comprises a quantity of OFDM symbols and a quantity of SRS combs that are occupied by at least two SRS ports, the at least two SRS ports belong to a same SRS resource, N is greater than or equal to M, and M is an integer not less than 2; and
receiving an SRS sent by the terminal device, wherein the SRS is sent based on a target pattern, and the target pattern is determined from the M SRS patterns based on the cyclic shift offset value.

15. The method according to claim 14, wherein at least two SRS patterns in the M SRS patterns have different quantities of OFDM symbols.

16. The method according to claim 14 or 15, wherein the method further comprises:

sending a first comb offset value to the terminal device, wherein
the first comb offset value is used to determine a position of an SRS comb and a cyclic shift value that are occupied by each SRS port in the at least two SRS ports, and the SRS is sent based on the target pattern, the position of the SRS comb, and the cyclic shift value.

17. The method according to claim 14 or 15, wherein the cyclic shift offset value corresponds to a plurality of SRS patterns in the M SRS patterns, and the method further comprises:

sending a second comb offset value to the terminal device, wherein
the second comb offset value is used to determine the target pattern from the plurality of SRS patterns.

18. The method according to any one of claims 14 to 17, wherein in the target pattern, a quantity of OFDM symbols occupied by the at least two SRS ports is at least two, the at least two SRS ports occupy at least two OFDM symbols, the at least two OFDM symbols comprise a first symbol and a second symbol, and an SRS port occupying the first symbol and an SRS port occupying the second symbol correspond to different cyclic shift values.

19. The method according to any one of claims 14 to 18, wherein in the target pattern, the quantity of OFDM symbols occupied by the at least two SRS ports is at least two, and the method further comprises:
sending OFDM symbol indication information to the terminal device, wherein the OFDM symbol indication information indicates a position of an OFDM symbol occupied by each SRS port in the at least two SRS ports, and the SRS is sent based on the position of the OFDM symbol occupied by each SRS port.

20. A sounding reference signal SRS transmission method, wherein the method comprises:

sending SRS resource configuration information to a terminal device, wherein the SRS resource configuration information indicates an SRS resource comprising W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, wherein
the W SRS ports correspond to T coherence groups, T is an even number greater than 1 and less than W, and a quantity of first OFDM symbols occupied by an SRS port corresponding to each coherence group in the T coherence groups is less than Q; and
receiving an SRS sent by the terminal device, wherein the SRS is sent based on the SRS resource configuration information.

21. The method according to claim 20, wherein Q is not greater than T, and the SRS port corresponding to each coherence group in the T coherence groups occupies a same OFDM symbol.

22. The method according to claim 20, wherein Q is greater than T, an SRS port corresponding to one coherence group in the T coherence groups occupies K consecutive OFDM symbols, K is Q/T, and Q/T is an integer.

23. The method according to any one of claims 20 to 22, wherein the SRS resource occupies a plurality of combs on each first OFDM symbol, the T coherence groups comprise a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

24. The method according to any one of claims 20 to 22, wherein the SRS port corresponding to each coherence group is on one comb on each first OFDM symbol.

25. The method according to any one of claims 20 to 24, wherein the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

26. The method according to any one of claims 20 to 24, wherein the SRS resource configuration information further indicates that repeated transmission is not configured or a configured quantity R of repeated transmissions is 1, and the Q first OFDM symbols are consecutive OFDM symbols.

27. A sounding reference signal SRS transmission apparatus, wherein the apparatus comprises:

a receiving unit, configured to receive a cyclic shift offset value sent by a network device, wherein the cyclic shift offset value is one of N candidate cyclic shift offset values, wherein
the N candidate cyclic shift offset values correspond to M SRS patterns, each SRS pattern in the M SRS patterns comprises a quantity of OFDM symbols and a quantity of SRS combs that are occupied by at least two SRS ports, the at least two SRS ports belong to a same SRS resource, N is greater than or equal to M, and M is an integer not less than 2;
a determining unit, configured to determine a target pattern from the M SRS patterns based on the cyclic shift offset value; and
a sending unit, configured to send an SRS based on the target pattern.

28. The apparatus according to claim 27, wherein at least two SRS patterns in the M SRS patterns have different quantities of OFDM symbols.

29. The apparatus according to claim 27 or 28, wherein the receiving unit is further configured to:

receive a first comb offset value sent by the network device, wherein
the first comb offset value is used to determine a position of an SRS comb and a cyclic shift value that are occupied by each SRS port in the at least two SRS ports, and
the sending unit is specifically configured to send the SRS based on the target pattern, the position of the SRS comb, and the cyclic shift value.

30. The apparatus according to claim 27 or 28, wherein the cyclic shift offset value corresponds to a plurality of SRS patterns in the M SRS patterns, and the receiving unit is further configured to:

receive a second comb offset value sent by the network device, wherein
the second comb offset value is used to determine the target pattern from the plurality of SRS patterns.

31. The apparatus according to any one of claims 27 to 30, wherein in the target pattern, a quantity of OFDM symbols occupied by the at least two SRS ports is at least two, the at least two SRS ports occupy at least two OFDM symbols, the at least two OFDM symbols comprise a first symbol and a second symbol, and an SRS port occupying the first symbol and an SRS port occupying the second symbol correspond to different cyclic shift values.

32. The apparatus according to any one of claims 27 to 31, wherein in the target pattern, the quantity of OFDM symbols occupied by the at least two SRS ports is at least two, and the receiving unit is further configured to:
receive OFDM symbol indication information sent by the network device, wherein the OFDM symbol indication information indicates a position of an OFDM symbol occupied by each SRS port in the at least two SRS ports, and the SRS is sent based on the position of the OFDM symbol occupied by each SRS port.

33. A sounding reference signal SRS transmission apparatus, wherein the apparatus comprises:

a receiving unit, configured to receive SRS resource configuration information sent by a network device, wherein the SRS resource configuration information indicates an SRS resource comprising W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, wherein
the W SRS ports correspond to T coherence groups, T is an even number greater than 1 and less than W, and a quantity of first OFDM symbols occupied by an SRS port corresponding to each coherence group in the T coherence groups is less than Q; and
a sending unit, configured to send an SRS based on the SRS resource configuration information.

34. The apparatus according to claim 33, wherein Q is not greater than T, and the SRS port corresponding to each coherence group in the T coherence groups occupies a same OFDM symbol.

35. The apparatus according to claim 33, wherein Q is greater than T, an SRS port corresponding to one coherence group in the T coherence groups occupies K consecutive OFDM symbols, K is Q/T, and Q/T is an integer.

36. The apparatus according to any one of claims 33 to 35, wherein the SRS resource occupies a plurality of combs on each first OFDM symbol, the T coherence groups comprise a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

37. The apparatus according to any one of claims 33 to 35, wherein the SRS port corresponding to each coherence group is on one comb on each first OFDM symbol.

38. The apparatus according to any one of claims 33 to 37, wherein the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

39. The apparatus according to any one of claims 33 to 37, wherein the SRS resource configuration information further indicates that repeated transmission is not configured or a configured quantity R of repeated transmissions is 1, and the Q first OFDM symbols are consecutive OFDM symbols.

40. A sounding reference signal SRS transmission apparatus, wherein the apparatus comprises:

a sending unit, configured to send a cyclic shift offset value to a terminal device, wherein the cyclic shift offset value is one of N candidate cyclic shift offset values, wherein
the N candidate cyclic shift offset values correspond to M SRS patterns, each SRS pattern in the M SRS patterns comprises a quantity of OFDM symbols and a quantity of SRS combs that are occupied by at least two SRS ports, the at least two SRS ports belong to a same SRS resource, N is greater than or equal to M, and M is an integer not less than 2; and
a receiving unit, configured to receive an SRS sent by the terminal device, wherein the SRS is sent based on a target pattern, and the target pattern is determined from the M SRS patterns based on the cyclic shift offset value.

41. The apparatus according to claim 40, wherein at least two SRS patterns in the M SRS patterns have different quantities of OFDM symbols.

42. The apparatus according to claim 40 or 41, wherein the sending unit is further configured to send a first comb offset value to the terminal device, wherein
the first comb offset value is used to determine a position of an SRS comb and a cyclic shift value that are occupied by each SRS port in the at least two SRS ports, and the SRS is sent based on the target pattern, the position of the SRS comb, and the cyclic shift value.

43. The apparatus according to claim 40 or 41, wherein the cyclic shift offset value corresponds to a plurality of SRS patterns in the M SRS patterns, and the sending unit is further configured to send a second comb offset value to the terminal device, wherein
the second comb offset value is used to determine the target pattern from the plurality of SRS patterns.

44. The apparatus according to any one of claims 40 to 43, wherein in the target pattern, a quantity of OFDM symbols occupied by the at least two SRS ports is at least two, the at least two SRS ports occupy at least two OFDM symbols, the at least two OFDM symbols comprise a first symbol and a second symbol, and an SRS port occupying the first symbol and an SRS port occupying the second symbol correspond to different cyclic shift values.

45. The apparatus according to any one of claims 40 to 44, wherein in the target pattern, the quantity of OFDM symbols occupied by the at least two SRS ports is at least two, and the sending unit is further configured to send OFDM symbol indication information to the terminal device, wherein the OFDM symbol indication information indicates a position of an OFDM symbol occupied by each SRS port in the at least two SRS ports, and the SRS is sent based on the position of the OFDM symbol occupied by each SRS port.

46. A sounding reference signal SRS transmission apparatus, wherein the apparatus comprises:

a sending unit, configured to send SRS resource configuration information to a terminal device, wherein the SRS resource configuration information indicates an SRS resource comprising W SRS ports, W is an even number greater than or equal to 4, the SRS resource occupies Q first OFDM symbols in one slot slot, Q is an even number greater than or equal to 2, SRS ports on the Q first OFDM symbols are different from each other, the SRS ports on the Q first OFDM symbols occupy a same resource block RB, a quantity of SRS ports on each first OFDM symbol is W/Q, and W/Q is an integer, wherein
the W SRS ports correspond to T coherence groups, T is an even number greater than 1 and less than W, and a quantity of first OFDM symbols occupied by an SRS port corresponding to each coherence group in the T coherence groups is less than Q; and
a receiving unit, configured to receive an SRS sent by the terminal device, wherein the SRS is sent based on the SRS resource configuration information.

47. The apparatus according to claim 46, wherein Q is not greater than T, and the SRS port corresponding to each coherence group in the T coherence groups occupies a same OFDM symbol.

48. The apparatus according to claim 46, wherein Q is greater than T, an SRS port corresponding to one coherence group in the T coherence groups occupies K consecutive OFDM symbols, K is Q/T, and Q/T is an integer.

49. The apparatus according to any one of claims 46 to 48, wherein the SRS resource occupies a plurality of combs on each first OFDM symbol, the T coherence groups comprise a first coherence group, when an SRS port corresponding to the first coherence group occupies the plurality of combs, the plurality of combs are not occupied by an SRS port corresponding to a second coherence group, and the second coherence group is a coherence group other than the first coherence group in the T coherence groups.

50. The apparatus according to any one of claims 46 to 48, wherein the SRS port corresponding to each coherence group is on one comb on each first OFDM symbol.

51. The apparatus according to any one of claims 46 to 50, wherein the SRS resource configuration information further indicates that a quantity R of repeated transmissions is greater than 1, the SRS resource occupies Q*R consecutive symbols in one slot, each first OFDM symbol in the Q first OFDM symbols is followed by R-1 consecutive symbols, and the R-1 consecutive symbols are used for repeated transmission of each first OFDM symbol in the Q first OFDM symbols.

52. The apparatus according to any one of claims 46 to 50, wherein the SRS resource configuration information further indicates that repeated transmission is not configured or a configured quantity R of repeated transmissions is 1, and the Q first OFDM symbols are consecutive OFDM symbols.

53. A sounding reference signal SRS transmission apparatus, comprising a processor and a memory, wherein the processor is coupled to the memory, and the processor invokes a computer program stored in the memory to implement the method according to any one of claims 1 to 26.

54. A computer-readable storage medium, wherein the computer-readable storage medium stores a computer program or computer instructions, and when the computer program or the computer instructions are run by a processor, the method according to any one of claims 1 to 26 is implemented.

55. A computer program product, wherein the computer program product comprises computer program code, and when the computer program code is run by a processor, the method according to any one of claims 1 to 26 is implemented.

FIG. 1

FIG. 2

FIG. 3

```
┌─────────────────┐                                    ┌─────────────────┐
│ Terminal device │                                    │ Network device  │
└─────────────────┘                                    └─────────────────┘
```

S401: Send a cyclic shift offset value, where the cyclic shift offset value is one of N candidate cyclic shift offset values, where the N candidate cyclic shift offset values correspond to M SRS patterns, and each SRS pattern in the M SRS patterns includes a quantity of OFDM symbols and a quantity of SRS combs that are occupied by at least two SRS ports

S402: Determine a target pattern from the M SRS patterns based on the cyclic shift offset value

S403: Send an SRS based on the target pattern

FIG. 4

FIG. 5A

| 4 cs | A quantity of candidate cyclic shift offset values is 8 | | | | | | | |
|------|------|------|------|------|------|------|------|------|
|      | CS0  | CS1  | CS2  | CS3  | CS4  | CS5  | CS6  | CS7  |
|      | 0    | 1    |      |      |      |      |      |      |

FIG. 5B

Terminal device

Network device

S601: Send SRS resource configuration information, where the SRS resource configuration information indicates an SRS resource including W SRS ports, and the W SRS ports correspond to T coherence groups

S602: Send an SRS based on the SRS resource configuration information

FIG. 6

Communication apparatus 700

Receiving unit 701

Determining unit 702

Sending unit 703

FIG. 7

Communication apparatus 800

Receiving unit 801

Sending unit 802

FIG. 8

Communication apparatus 900

Sending unit — 901

Receiving unit — 902

FIG. 9

Communication apparatus 1000

Sending unit — 1001

Receiving unit — 1002

FIG. 10

1101 Processor

1104

1103

11031 Transmitter

11033

11032 Receiver

1102

Computer program code

Memory

Transceiver

FIG. 11

FIG. 12

## INTERNATIONAL SEARCH REPORT

| | International application No. |
|---|---|
| | **PCT/CN2024/070326** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, WPABS, WPABSC, ENTXT, ENTXTC, VEN, 3GPP: 参考信号, 循环, 移位, 偏移, 偏置, 步长, 间隔, 图样, 梳齿, 端口, 资源, 时隙, 符号, 偶数, 相干, 配置, SRS, cyclic, shift, offset, step, interval, pattern, comb, port, resource, slot, symbol, even, coherent, configuration

### C. DOCUMENTS CONSIDERED TO BE RELEVANT

| Category* | Citation of document, with indication, where appropriate, of the relevant passages | Relevant to claim No. |
|---|---|---|
| A | WO 2021046724 A1 (HUAWEI TECHNOLOGIES CO., LTD.) 18 March 2021 (2021-03-18) description, page 14, line 9 to page 21, line 23 | 1-6, 14-19, 27-32, 40-45, 53-55 |
| A | WO 2020221081 A1 (HUAWEI TECHNOLOGIES CO., LTD.) 05 November 2020 (2020-11-05) description, page 14, line 14 to page 15, line 35 | 7-13, 20-26, 33-39, 46-55 |
| A | CN 113366900 A (OPPO GUANGDONG MOBILE TELECOMMUNICATIONS CO., LTD.) 07 September 2021 (2021-09-07) entire document | 1-55 |
| A | CN 115442892 A (VIVO COMMUNICATION TECHNOLOGY CO., LTD.) 06 December 2022 (2022-12-06) entire document | 1-55 |
| A | US 2022166583 A1 (VIVO COMMUNICATION TECHNOLOGY CO., LTD.) 26 May 2022 (2022-05-26) entire document | 1-55 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 March 2024** | **02 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| PCT/CN2024/070326 |

### C.  DOCUMENTS CONSIDERED TO BE RELEVANT

| Category* | Citation of document, with indication, where appropriate, of the relevant passages | Relevant to claim No. |
|---|---|---|
| A | HUAWEI et al. "SRS design for NR positioning" *3GPP TSG RAN WG1 Meeting #98bis R1-1911343*, 20 October 2019 (2019-10-20), entire document | 1-55 |

Form PCT/ISA/210 (second sheet) (July 2022)

**INTERNATIONAL SEARCH REPORT**
Information on patent family members

International application No.

**PCT/CN2024/070326**

| Patent document cited in search report | | | Publication date (day/month/year) | Patent family member(s) | | | Publication date (day/month/year) |
|---|---|---|---|---|---|---|---|
| WO | 2021046724 | A1 | 18 March 2021 | US | 2022200760 | A1 | 23 June 2022 |
| | | | | EP | 4068714 | A1 | 05 October 2022 |
| | | | | CN | 114365458 | A | 15 April 2022 |
| WO | 2020221081 | A1 | 05 November 2020 | CN | 111865524 | A | 30 October 2020 |
| CN | 113366900 | A | 07 September 2021 | WO | 2021012981 | A1 | 28 January 2021 |
| CN | 115442892 | A | 06 December 2022 | WO | 2022253271 | A1 | 08 December 2022 |
| US | 2022166583 | A1 | 26 May 2022 | WO | 2021027513 | A1 | 18 February 2021 |
| | | | | CN | 111835488 | A | 27 October 2020 |

Form PCT/ISA/210 (patent family annex) (July 2022)

**REFERENCES CITED IN THE DESCRIPTION**

**Patent documents cited in the description**

- CN 202310125011